# EUROPÄISCHE PATENTSCHRIFT

(11) **EP 3 234 716 B1**
(45) Veröffentlichungstag und Bekanntmachung des Hinweises auf die Patenterteilung: **03.04.2019**
(21) Anmeldenummer: 15797295.1
(22) Anmeldetag: 17.11.2015
(51) Int. Cl.: G05D 1/02

(54) **VERFAHREN ZUM ERKENNEN EINES ARBEITSBEREICHS EINES AUTONOMEN ARBEITSGERÄTS SOWIE EIN ARBEITSGERÄT**
METHOD FOR DETECTING A WORKING AREA OF AN AUTONOMOUS WORKING DEVICE, AND A WORKING DEVICE
PROCÉDÉ D'IDENTIFICATION D'UNE ZONE DE TRAVAIL D'UNITÉ DE TRAVAIL AUTONOME ET UNITÉ DE TRAVAIL

(30) Priorität: 16.12.2014 DE 102014226077
(43) Veröffentlichungstag der Anmeldung: 25.10.2017
(73) Patentinhaber: Robert Bosch GmbH, 70442 Stuttgart (DE)
(72) Erfinder: EAGLING, Thomas, Norwich Norfolk NR16 2QF (GB); FINCHAM, Steve, Colchester Essex CO6 1NS (GB)
(86) Internationale Anmeldenummer: PCT/EP2015/076762
(87) Internationale Veröffentlichungsnummer: WO 2016/096279

(56) Entgegenhaltungen:
- EP-A1- 2 741 160
- WO-A1-03/104908
- DE-A1-102010 028 251

## Beschreibung

### Stand der Technik

Die vorliegende Erfindung betrifft ein Verfahren zum Erkennen einer Position eines mobilen, insbesondere autonomen, Roboterfahrzeugs relativ zu einem durch einen stromdurchflossenen Begrenzungsleiter definierten Arbeitsbereich. Insbesondere kann das Verfahren verwendet werden, um in dem Roboterfahrzeug bei Erreichen oder Überschreiten einer Grenze des definierten Arbeitsbereichs eine Funktion auszuführen. Verfahren zum Erkennen einer Position eines mobilen Roboterfahrzeugs relativ zu einem durch einen stromdurchflossenen Begrenzungsleiter definierten Arbeitsbereich wurden bereits vorgeschlagen, beispielsweise in DE 10 2010 028 251 A1, EP 2 741 160 A1 und EP 1 512 053 A1.

### Offenbarung der Erfindung

Automatische oder zumindest teilweise automatische mobile Arbeitsgeräte und/oder Roboterfahrzeuge, insbesondere autonome Roboterfahrzeuge wie beispielsweise Bodenbearbeitungsmaschinen, sollen sich in der Regel selbsttätig innerhalb eines definierten Arbeitsbereiches bewegen, ohne diesen zu verlassen. Es sind vielfältige Anwendungsgebiete autonomer Roboterfahrzeuge bekannt, beispielsweise als autonome Rasenmäher, Rasenvertikutierroboter, Bodenkehrroboter, Schneeräumroboter, Reinigungsroboter, Staubsaugerroboter oder anderweitige Serviceroboter. Bei der Verwendung von Roboterfahrzeugen im Freien oder in anderen, nicht durch Mauern begrenzten Räumen, kann eine Außengrenze des zu bearbeitenden Arbeitsbereichs vorzugsweise durch einen elektrischen Begrenzungsleiter definiert sein.

Der Begrenzungsleiter, typischerweise realisiert in Form eines Drahtes oder Kabels, der die Außengrenze des Bereichs markiert, wird von einem elektrischen Strom, insbesondere einem elektrischen Wechselstrom, durchflossen, wobei ein, insbesondere zeitlich veränderliches, elektromagnetisches Feld in der Umgebung des Begrenzungsleiters erzeugt wird. Dieses elektromagnetische Feld, vorzugsweise dessen magnetische Komponente, kann durch zumindest einen geeigneten Sensor in dem autonomen Roboterfahrzeug detektiert werden und in ein elektrisches Empfangssignal umgewandelt werden. Vorzugsweise kann eine zeitliche Änderung eines elektromagnetischen Feldes mittels zumindest einer Detektionsspule unter Erzeugung einer durch Änderung der Magnetfeldkomponente induzierten elektrischen Wechselspannung detektiert werden. Das generierte Empfangssignal, insbesondere eine in einer Detektionsspule induzierte Wechselspannung, kann daraufhin verarbeitet und/oder ausgewertet werden, um eine Information über die Position des autonomen Roboterfahrzeugs relativ zu dem Begrenzungsleiter zu erhalten. Insbesondere kann eine solche Information über die Position eine Information darüber sein, ob sich das Roboterfahrzeug innerhalb oder außerhalb des durch den Begrenzungsleiter definierten Bereichs befindet. Vorteilhaft kann diese Information dazu vorgesehen sein, bei einem Erreichen und/oder einem Überqueren des Begrenzungsleiters eine Funktion des Roboterfahrzeugs auszuführen. Insbesondere kann beispielsweise vorgesehen sein, dass das autonome Roboterfahrzeug seine Fahrtrichtung ändert, um den Arbeitsbereich nicht zu verlassen und/oder eine Bearbeitung des Arbeitsbereichs bei dessen Verlassen beendet wird.

Das durch einen stromdurchflossenen Begrenzungsleiter emittierte elektromagnetische Feld, insbesondere dessen magnetische Feldstärke H, nimmt mit radialem Abstand zu dem Begrenzungsleiter sowie sinkender Stromstärke I in dem Begrenzungsleiter proportional ab. Damit eine Erkennung der Position eines autonomen Roboterfahrzeugs relativ zu dem Begrenzungsleiter auch in größeren Distanzen vom Begrenzungsleiter möglich ist, ist folglich eine hohe Stromstärke in dem stromdurchflossenen Begrenzungsleiter notwendig. Beispielsweise wird eine Stromstärke mit einer Amplitude von bis zu 5 A zum Betrieb eines Verfahrens zur Erkennung der Position eines autonomen Rasenmähers relativ zu einem einen Garten begrenzenden Begrenzungsleiter verwendet, resultierend in einer zeitgemittelten Stromstärke von typischerweise ca. 3-4 A.

Unvorteilhaft erfordert in Verfahren des Standes der Technik die Verwendung hoher Stromstärken eine hohe Leistung und Energie zur Erzeugung des in den Begrenzungsleiter eingespeisten Stromsignals. Ferner könnten im Extremfall auf Grund Verwendung hoher Stromstärken und damit einhergehender starker elektromagnetischer Felder Interferenz- und/oder Störeffekte anderer elektrischer Geräte, insbesondere anderer autonomer Roboterfahrzeuge, auftreten.

Das erfindungsgemäße Verfahren zum Erkennen einer Position eines mobilen, insbesondere autonomen, Roboterfahrzeugs relativ zu einem einen definierten Bereich umgebenden Begrenzungsleiter geht von zumindest folgenden Schritten aus:
- Bereitstellen eines elektrischen Stroms und eines pseudo-zufälligen Begrenzungssignals,
- Erzeugen eines Stromsignals unter Verwendung des elektrischen Stroms und des pseudo-zufälligen Begrenzungssignals,
- Einspeisen des Stromsignals auf den Begrenzungsleiter, sodass ein elektromagnetisches Wechselfeld erzeugt wird,
- Detektieren von Magnetfeldänderungen, die auf das elektromagnetische Wechselfeld zurückgehen, insbesondere mittels einer durch Magnetfeldänderungen induzierten Spannung, und Erzeugen eines Empfangssignals aus den Magnetfeldänderungen,
- Auswerten des Empfangsssignals unter Erzeugung zumindest eines rekonstruierten Begrenzungssignals,
- Bereitstellen eines dem pseudo-zufälligen Begrenzungssignal im Wesentlichen identischen Referenzsignals,
- Durchführen eines Mustererkennungsverfahrens, insbesondere eines Korrelationsverfahrens, um einen Korrelationswert zwischen dem Referenzsignal und dem rekonstruierten Begrenzungssignal zu ermitteln,
- Bestimmen der Position innerhalb oder außerhalb des definierten Bereichs abhängig von dem ermittelten Korrelationswert.

Erfindungsgemäß wird der elektrische Strom und/oder das pseudo-zufällige Begrenzungssignal mit einem Modulationssignal amplituden-moduliert, sodass das Stromsignal amplituden-moduliert ist.

In dem erfindungsgemäßen Verfahren wird der durch das autonome Roboterfahrzeug zu bearbeitende Bereich (auch Arbeitsbereich) durch einen Begrenzungsleiter eingegrenzt, der an einen Generator zur Erzeugung eines Stromes in dem Begrenzungsleiter angeschlossen wird. Mit Initiieren eines Stromes, insbesondere eines Wechselstromes, in dem Begrenzungsleiter wird ein Stromsignal von dem Generator auf den Begrenzungsleiter eingespeist, das ein dem Stromsignal korrespondierendes, insbesondere veränderliches, elektromagnetisches Feld in der Umgebung des Begrenzungsleiters erzeugt. Bevorzugt wird das eingespeiste Stromsignal aus einem dem Stromgenerator durch einen Begrenzungssignalgenerator bereitgestellten Begrenzungssignal generiert, das einer zufälligen, insbesondere pseudo-zufälligen, Signalabfolge entspricht.

Vorteilhaft weisen pseudo-zufällige Signalabfolgen günstige Eigenschaften hinsichtlich ihres Frequenzspektrums auf, sodass sich eine hohe Zuverlässigkeit des erfindungsgemäßen Verfahrens auch bei störungsintensiven Umgebungsbedingungen ergibt. Die Signalabfolge des Begrenzungssignals kann dabei mittels des Begrenzungssignalgenerators auf unterschiedliche, bekannte Weise dem Stromgenerator bereitgestellt werden, beispielsweise durch Auslesen einer Signalabfolge aus einer Speichereinheit, durch Generieren einer Signalabfolge mittels eines Zufallszahlengenerators (in einfacher Weise beispielsweise mit Hilfe eines Schieberegisters und Logikgatter, wie z.B. einem Exklusiv-ODER-Gatter) oder dergleichen. Bevorzugt stellen Stromgenerator und Begrenzungssignalgenerator ein gemeinsames Gerät dar.

Daneben wird dem autonomen Roboterfahrzeug ein dem Begrenzungssignal im Wesentlichen identisches Referenzsignal bereitgestellt. Unter "im Wesentlichen identisch" soll verstanden werden, dass das Referenzsignal und das Begrenzungssignal hinsichtlich der in der Signalabfolge enthaltenen, zur Durchführung des erfindungsgemäßen Mustererkennungsverfahrens, insbesondere des Korrelationsverfahrens, relevanten Information, identisch sind, sich weitere Parameter aber, insbesondere Parameter einer signaltechnischen Umsetzung wie beispielsweise eine Amplitude, angenommene Werte (beispielsweise Amplitude 1 eines binären Begrenzungssignals in {0,1} und Amplitude 2 eines binären Referenzsignals in {0,2}) oder dergleichen, unterscheiden können.

Das Referenzsignal kann im Roboterfahrzeug auf unterschiedliche Weise bereitgestellt werden, insbesondere einer Auswerteeinheit des autonomen Roboterfahrzeugs zur Verfügung gestellt werden, beispielsweise durch Auslesen einer Signalabfolge aus einer Speichereinheit, durch Generieren einer Signalabfolge mittels eines Zufallszahlengenerators und/oder durch Übertragung der Signalabfolge des Begrenzungssignals von dem Begrenzungssignalgenerator unter Verwendung einer Datenkommunikationsschnittstelle, besonders bevorzugt durch Übertragung der Signalabfolge unter Verwendung einer kabellosen Datenkommunikationsschnittstelle (Wlan, Bluetooth, Funk, Infrarot, etc.).

Mittels einer Detektoreinheit des autonomen Roboterfahrzeugs können Magnetfeldänderungen, die auf das durch das in dem Begrenzungsleiter eingespeiste Stromsignal erzeugte elektromagnetische Feld zurückgehen, detektiert und aus diesen detektierten Magnetfeldänderungen ein Empfangssignal erzeugt werden. Beispielsweise kann mittels einer Detektionsspule des Roboterfahrzeugs eine Magnetfeldänderung in Form einer durch die Magnetfeldänderung induzierten elektrischen Spannung in der Detektionsspule detektiert und unmittelbar als Empfangssignal zur weiteren Verarbeitung zur Verfügung gestellt werden, bevorzugt der Auswerteeinheit zur Verfügung gestellt werden.

Unter Verwendung eines Auswerteverfahrens kann das Empfangssignal, insbesondere mittels der Auswerteeinheit des Roboterfahrzeugs, ausgewertet und das dem Stromgenerator bereitgestellte Begrenzungssignal rekonstruiert und zur weiteren Verarbeitung zur Verfügung gestellt werden.

Mit Hilfe eines Mustererkennungsverfahrens, insbesondere mit Hilfe eines Korrelationsverfahrens - wie es im Detail insbesondere in DE 10 2010 028 251 A1 beschrieben ist - wird ermittelt, ob das rekonstruierte Begrenzungssignal und das Referenzsignal korrelieren, d.h. deren Signalabfolgen im Wesentlichen identisch oder invertiert vorliegen. Vorteilhaft kann dies beispielsweise mit der Berechnung eines Korrelationswertes, besonders vorteilhaft mit der Feststellung eines Vorzeichens eines Korrelationswertes, realisiert werden. Anhand der ermittelten Information, insbesondere anhand des Korrelationswertes, wird festgestellt, ob sich das autonome Roboterfahrzeug innerhalb (insbesondere positiver Korrelationswert) oder außerhalb (insbesondere negativer Korrelationswert) des durch den Begrenzungsleiter definierten Bereichs befindet. Unter Korrelationswert soll dabei insbesondere ein Wert verstanden werden, der die Ähnlichkeit zweier Signale beschreibt. Dabei bezieht sich der Begriff Korrelationswert nicht nur auf einen Wert, der im Rahmen eines Korrelationsverfahrens erhalten wird, sondern ebenfalls auf einen die Ähnlichkeit zweier Signale beschreibenden Wert im Rahmen eines beliebigen Mustererkennungsverfahrens.

In einer Ausführungsform des erfindungsgemäßen Verfahrens kann eine Synchronisation des Referenzsignals auf das rekonstruierte Begrenzungssignal oder umgekehrt vorgesehen sein (Berechnung des Korrelationswertes bei verschiedenen Zeitversatzen zwischen Referenzsignal und rekonstruiertem Begrenzungssignal; vgl. DE 102010 028 251). Bei einem Feststellen, dass das Begrenzungssignal und das Referenzsignal korrelieren, vorteilhaft mit der Berechnung eines Korrelationswertes, besonders vorteilhaft mit der Feststellung eines Vorzeichens eines Korrelationswertes, wird dabei erkannt, ob sich das autonome Roboterfahrzeug innerhalb (insbesondere positiver Korrelationswert) oder außerhalb (insbesondere negativer Korrelationswert) des durch den Begrenzungsleiter definierten Bereichs befindet.

Es wird besonders darauf hingewiesen, dass an Stelle des Korrelationsverfahrens auch ein beliebiges anderes Mustererkennungsverfahren durchgeführt werden kann, mittels dessen sich bestimmen lässt, ob das Referenzsignal und das rekonstruierte Begrenzungssignal im Wesentlichen identisch sind, d.h. ob insbesondere eine Signalabfolge des rekonstruierten Begrenzungssignal dem Referenzsignals oder dem Inversen des Referenzsignals im Wesentlichen identisch, d.h. zumindest nahezu identisch, ist. Beispiele für derartige Mustererkennungsverfahren bzw. Mustererkennungsroutinen sind gegeben durch Korrelationsverfahren, Filterverfahren, Fit-Verfahren, insbesondere Least-Square-Verfahren, Such- oder Vergleichsalgorithmen, Pattern-Matching-Verfahren oder andere, einem Fachmann sinnvoll erscheinende Mustererkennungsverfahren. Bevorzugt, allerdings nicht beschränkend, wird ein Korrelationsverfahren vorgeschlagen und als Ausführungsbeispiel vorgestellt, da sich unter dessen Verwendung eine technisch besonders einfache, schnelle und wirtschaftlich vorteilhafte Mustererkennung realisieren lässt, die besonders bevorzugt unmittelbar und mit geringem Rechenaufwand und geringen Anforderungen an eine Auswerteeinheit, insbesondere eine Auswerteelektronik, in dem mobilen Roboterfahrzeug durchgeführt werden kann. Das erfindungsgemäße Verfahren ist jedoch auch auf andere Mustererkennungsverfahren und/oder -routinen und/oder -algorithmen übertragbar. Dabei bezeichnet der Begriff Korrelationswert insbesondere hinsichtlich anderer Mustererkennungsverfahren ebenfalls einen Wert, der die Ähnlichkeit zweier Signale beschreibt.

Vorteilhaft kann das Korrelationsverfahren mit geringem Rechenaufwand und geringen Anforderungen an eine Auswerteeinheit, insbesondere an eine Auswerteelektronik, in dem mobilen Roboterfahrzeug durchgeführt werden. Alternativ und/oder zusätzlich kann das Korrelationsverfahren auch in einem anderen, insbesondere externen, eine Auswerteeinheit aufweisenden Datenverarbeitungsgerät durchgeführt werden. Vorzugsweise wird das Korrelationsverfahren unter Verwendung der Auswerteeinheit oder einer vergleichbaren, zur Ausführung des Korrelationsverfahrens vorgesehenen Vorrichtung des Roboterfahrzeugs und/oder des Datenverarbeitungsgeräts durchgeführt.

Besonders vorteilhaft ermöglicht das Mustererkennungsverfahren, insbesondere das Korrelationsverfahren, bereits bei Einschalten des autonomen Roboterfahrzeugs ohne ein vorhergehendes Einlernen eine Positionsbestimmung des Roboterfahrzeugs relativ zu dem Begrenzungsleiter.

Besonders vorteilhaft wird der bereitgestellte elektrische Strom und/oder das pseudo-zufällige Begrenzungssignal in dem erfindungsgemäßen Verfahren mit einem Modulationssignal amplituden-moduliert. Dabei soll unter "amplituden-moduliert" verstanden werden, dass ein zeitabhängiges Signal, hier das pseudo-zufällige Begrenzungssignal oder der auf den Begrenzungsleiter einzuspeisende elektrische Strom, mittels einer zeitabhängigen Funktion, insbesondere einer signaltechnischen Umsetzung einer zeitabhängigen Funktion, derart überlagert und/oder modifiziert wird, dass das resultierende Signal eine veränderte zeitabhängige Amplitudeneigenschaft aufweist gegenüber dem ursprünglichen, unmodulierten Signal. Bevorzugt kann diese Modulation additiv, multiplikativ, durch Faltung, durch Potenzieren und/oder anderweitig mathematisch sinnvoll aus dem ursprünglichen Signal sowie dem Modulationssignal hervorgehen. Bevorzugt findet die Amplitudenmodulation unmittelbar in dem Begrenzungssignalgenerator und/oder in dem Stromgenerator statt. Insbesondere kann das Begrenzungssignal auch ohne Amplitudenmodulation direkt als pseudo-zufällige Signalabfolge erzeugt werden, wobei es aber dennoch als amplituden-modulierte Signalabfolge - aus einer Signalabfolge mit einer zeitabhängigen Funktion überlagert und/oder modifiziert, insbesondere amplituden-moduliert erzeugt - beschreibbar ist.

Dabei stellt die Verwendung des reinen pseudo-zufälligen Begrenzungssignals und/oder dessen Kodierung, beispielsweise im Rahmen einer Manchester-Kodierung, keine Amplitudenmodulation im Sinne der Erfindung dar. Erst mit Überlagerung des, insbesondere kodierten, pseudo-zufälligen Begrenzungssignals und/oder des elektrischen Stroms mit einem Modulationssignal wird ein erfindungsgemäßes amplituden-moduliertes Begrenzungssignal bzw. ein erfindungsgemäßer amplituden-modulierter Strom erzeugt.

Erfindungsgemäß und unabhängig von der Realisierung wird auf diese Weise ein zeitlich veränderliches Stromsignal auf den Begrenzungsleiter eingespeist, dessen Stromstärke als Folge der Amplitudenmodulation entweder des elektrischen Stroms selbst oder des der signaltechnischen Umsetzung zu Grunde liegenden Begrenzungssignals zeitabhängig moduliert ist. Folglich ist ebenfalls das durch den Stromfluss in dem Leiter erzeugte elektromagnetische Feld zeitabhängig in seiner Intensität moduliert.

Bevorzugt wird während des Betriebs das resultierende amplituden-modulierte Stromsignal kontinuierlich, d.h. insbesondere ohne Unterbrechungen und/oder Pausen, auf den Begrenzungsleiter eingespeist.

Durch die Amplitudenmodulation ist es besonders vorteilhaft möglich, den mittleren, auf den Begrenzungsleiter eingespeisten Strom zu modifizieren und folglich auch die (Sende-)Leistung, die Energie, mit der das elektromagnetische Feld erzeugt wird, sowie die Reichweite des erzeugten elektromagnetischen Feldes zu beeinflussen, insbesondere zu modulieren.

In einer vorteilhaften Ausführungsform des erfindungsgemäßen Verfahrens zur Erkennung einer Position eines mobilen Roboterfahrzeugs relativ zu einem einen definierten Bereich umgebenden Begrenzungsleiter weist das Modulationssignal zumindest einen ersten Signalabschnitt mit einer ersten Amplitude und einen zweiten Signalabschnitt mit einer zweiten Amplitude auf, wobei sich die erste Amplitude um einen Faktor von der zweiten Amplitude unterscheidet, der insbesondere größer als 10 ist, vorzugsweise größer als 100, besonders bevorzugt größer als 120.

Somit wird vorteilhaft erreicht, dass sich das resultierende, auf den Begrenzungsleiter eingespeiste amplituden-modulierte Stromsignal in zumindest zwei Signalabschnitte aufteilt, deren Amplituden sich unterscheiden, insbesondere um einen Faktor größer als 10, vorzugsweise um einen Faktor größer als 100, besonders bevorzugt um einen Faktor größer als 120. Das durch den Stromfluss in dem Begrenzungsleiter erzeugte elektromagnetische Feld weist in Folge der zumindest zwei Signalabschnitte unterschiedlicher Amplitude ebenfalls zeitlich variierende physikalische Eigenschaften auf, insbesondere hinsichtlich Feldstärke, Flussdichte, Leistungsdichte, Energiedichte und dergleichen sowie deren zeitabhängiger Änderung. Insbesondere lassen sich die zeitabhängigen Verläufe dieser Eigenschaften ebenfalls in eine gleiche Anzahl an Signalabschnitten unterteilen. Auf diese Weise können besonders vorteilhaft elektromagnetische Felder erzeugt werden, die sich in einer durch das elektromagnetische Feld übertragbaren Signalstärke - und damit in ihrer geometrischen Reichweite - in eine gleiche Anzahl an Signalabschnitten unterteilen lassen wie das der Amplitudenmodulation zu Grunde liegende Modulationssignal. Eine zeitabhängige Reichweitenmodulation des mit dem erzeugten elektromagnetischen Feld zu übertragenden Signals kann auf diese Weise besonders vorteilhaft und einfach realisiert werden. Signalabschnitte hoher Amplitude des auf dem Begrenzungsleiter eingespeisten Stromsignals erzeugen langreichweitige elektromagnetische Felder, während Signalabschnitte geringer Amplitude kurzreichweitige elektromagnetische Felder erzeugen.

Ferner kann eine Amplitudenmodulation auch mittels eines Modulationssignals erfolgen, das insbesondere mehr als zwei Signalabschnitte aufweist, sodass mehr als zwei Reichweitenbereiche des zu übertragenden Signals zeitabhängig realisierbar sind.

Besonders vorteilhaft kann mit einer erfindungsgemäßen Amplitudenmodulation eine Erkennung der Position des mobilen Roboterfahrzeugs relativ zu dem Begrenzungsleiter in einem großen (geometrischen) Bereich sichergestellt werden, bei vorteilhafter Reduzierung, Anpassung und/oder Optimierung der zur Erzeugung des elektromagnetischen Feldes benötigten mittleren Energie und/oder Leistung.

Unter "angepasst" und "optimiert" soll insbesondere verstanden werden, dass die elektromagnetischen Felder sowie die zu deren Erzeugung benötigte Energie und/oder Leistung an geometrische und/oder physikalische Rahmenbedingungen des jeweiligen Anwendungsgebietes des mobilen Roboterfahrzeugs angepasst bzw. diesbezüglich optimiert werden können. Bevorzugt lässt sich beispielsweise eine maximale Energie und/oder Leistung zur Erzeugung des elektromagnetischen Feldes, d.h. des in den Begrenzungsleiter eingespeisten Stromsignals, reduzieren, wenn das mobile Roboterfahrzeug sich nur in einem vergleichsweise kleinflächigen Bereich, d.h. zu jeder Zeit in einem vergleichsweise geringen Abstand zu dem Begrenzungsleiter befindet. Eine Veränderung, insbesondere eine Reduzierung und/oder Optimierung der maximalen Energie und/oder Leistung kann besonders vorteilhaft über eine Veränderung der Amplituden der Signalanteile und/oder deren zeitlicher Dauern realisiert werden.

Je nach gegenwärtiger Entfernung des mobilen Roboterfahrzeugs von dem Begrenzungsleiter werden unterschiedliche zeitlich veränderliche elektromagnetische Felder detektiert. In relativ großer Entfernung kann die Detektoreinheit des Roboterfahrzeugs lediglich die langreichweitigen elektromagnetischen Felder detektieren (hohe Amplitude des amplituden-modulierten Stromsignals im Begrenzungsleiter), die durch die kurzreichweitigen Signalabschnitte unterbrochen sind (niedrige Amplitude des Stromsignals im Begrenzungsleiter), während in relativ dichter Distanz zu dem Begrenzungsleiter, insbesondere in unmittelbarer Umgebung des Begrenzungsleiters, der gesamte zeitabhängige Signalverlauf, bestehend aus Signalabschnitten hoher und niedriger Signalstärke, detektiert werden kann.

In einer vorteilhaften Ausführungsform des erfindungsgemäßen Verfahrens zur Erkennung einer Position eines mobilen Roboterfahrzeugs relativ zu einem einen definierten Bereich umgebenden Begrenzungsleiter ist der erste Signalabschnitt des Modulationssignals zeitlich kürzer ist als der zweite Signalabschnitt des Modulationssignals, insbesondere um einen Faktor 5 kürzer, bevorzugt um einen Faktor 10 kürzer, besonders bevorzugt um einen Faktor 17 kürzer.

Auf diese Weise wird ermöglicht, eine zeitliche Abfolge, insbesondere im Falle eines periodischen Modulationssignals eine Frequenz und/oder Periodizität, des der Erzeugung des elektromagnetischen Feldes zu Grunde liegenden, auf den Begrenzungsleiter eingespeisten Stromsignals vorzugeben. Einhergehend damit kann eine zur Erzeugung der elektromagnetischen Felder benötigte mittlere Energie und/oder Leistung variiert, insbesondere angepasst, insbesondere reduziert oder erhöht, bevorzugt optimiert werden.

Bevorzugt kann ein Signalabschnitt hoher Amplitude des auf dem Begrenzungsleiter eingespeisten Stromsignals eine vergleichsweise kurze zeitliche Dauer aufweisen, während ein Signalabschnitt geringer Amplitude dieses Stromsignals eine vergleichsweise lange zeitliche Dauer aufweisen kann. Auf diese Weise lässt sich die Erkennung der Position des mobilen Roboterfahrzeugs relativ zu dem den definierten Bereich umgebenden Begrenzungsleiter in einem großen (geometrischen) Bereich sicherstellen, bei weiterer vorteilhafter Reduzierung der zur Erzeugung des elektromagnetischen Feldes benötigten mittleren Energie und/oder Leistung. Die langreichweitigen elektromagnetischen Felder - ebenso das damit übertragene Signal - werden auf zeitlich vergleichsweise kurze Signalabschnitte begrenzt, kurzreichweitige elektromagnetische Felder werden während vergleichsweise langer zeitlicher Dauern erzeugt. Neben der Reduktion der zum Betrieb des mobilen Roboterfahrzeugs benötigten Energie und/oder Leistung wird besonders vorteilhaft ebenfalls eine Verringerung von Interferenzeffekten, insbesondere von nachteiligen Störinterferenzen, erreicht - bei Erhalt einer vollständigen Signalabdeckung über den gesamten von dem Begrenzungsleiter definierten Bereich.

Vorteilhaft können zeitliche Dauern der Signalabschnitte entsprechend einer gewünschten und/oder benötigten mittleren Energie und/oder Leistung, insbesondere beispielsweise vorgegeben durch eine Größe der Bearbeitungsfläche, durch eine benötigte minimale Signaldauer und/oder Signalintensität zur zuverlässigen Erkennung der Position, durch eine maximal zulässige Energieabstrahlung des Systems oder dergleichen, angepasst werden.

In einer vorteilhaften Ausführungsform des erfindungsgemäßen Verfahrens zur Erkennung einer Position eines mobilen Roboterfahrzeugs relativ zu einem einen definierten Bereich umgebenden Begrenzungsleiter wird der elektrische Strom und/oder das pseudo-zufällige Begrenzungssignal mit einem periodischen Modulationssignal amplituden-moduliert.

Insbesondere lässt sich auf diese Weise auf einfache und wirtschaftlich sinnvolle Weise eine Amplitudenmodulation realisieren. Ferner kann eine Frequenz eines periodisch amplituden-modulierten Signals als zusätzliche Kennung des Begrenzungssignals genutzt werden, beispielsweise im Rahmen einer Unterscheidung und/oder Filterung von Begrenzungssignalen, die von nahe beieinander befindlichen Begrenzungsleitern übertragen werden.

In einer vorteilhaften Ausführungsform des erfindungsgemäßen Verfahrens zur Erkennung einer Position eines mobilen Roboterfahrzeugs relativ zu einem einen definierten Bereich umgebenden Begrenzungsleiter entspricht das Modulationssignal zumindest teilweise einer Stufenfunktion, einer Rechteckfunktion, einer anderen, insbesondere unstetigen, Funktion oder einer signaltechnischen Annäherung an eine dieser Funktionen.

Erfindungsgemäß sind insbesondere Funktionen bzw. signaltechnische Annäherungen an Funktionen als Modulationssignal von Interesse, die steile steigende und/oder fallende Flanken aufweisen. Unter "steil" soll insbesondere verstanden werden, dass die zeitliche Änderung der Amplitude des Modulationssignals im Rahmen einer solchen Flanke wesentlich kürzer ist als die Dauer des entsprechenden Signalabschnitts des Modulationssignals, insbesondere kürzer als 1/10 dieser Dauer, vorteilhaft kürzer als 1/100 dieser Dauer, besonders vorteilhaft kürzer als 1/1000 dieser Dauer des entsprechenden Signalabschnitts. Bevorzugt sind Funktionen bzw. signaltechnische Annäherungen an Funktionen als Modulationssignal von Interesse, die quasiinstantane Amplitudenänderungen aufweisen, wie dies insbesondere bei unstetigen mathematischen Funktionen, wie beispielsweise der Stufenfunktion, der Rechteckfunktion, der Treppenfunktion oder der (Heaviside-)Sprungfunktion der Fall ist.

Unter "signaltechnischen Annäherungen an Funktionen" sind insbesondere signaltechnische Umsetzungen der Funktionen, beispielsweise als Strom, Spannung oder anderweitige technische Größe gemeint, die typischerweise stetig sind und daher typischerweise keine exakte Übereinstimmung ihres zeitlichen Verlaufs mit der theoretischen mathematischen Funktion aufweisen (auf Grund von Verzögerungszeiten, Kapazitäten und/oder Induktivitäten in einem erzeugenden Gerät oder dergleichen). Insbesondere lassen sich daher "signaltechnische Umsetzungen" oftmals besser mit einer funktionalen Annäherung beschreiben, beispielsweise mit Linearkombinationen mehrerer Funktionen, vorzugsweise stetiger Funktionen, beispielsweise Polynomen n-ten Grades, trigonometrischen Funktionen oder dergleichen.

Daher sind alternativ und/oder zusätzlich auch hochgradige Polynome, Summenfunktionen, trigonometrische Funktionen, Exponentialfunktionen, Fourierreihen oder dergleichen sowie Kombinationen und/oder mathematische Verknüpfungen solcher Funktionen bzw. signaltechnische Annäherungen an solche Funktionen als Modulationssignal denkbar und aus praktischer Sicht geeigneter. Die unvollständige und exemplarische Auflistung von Beispielen für Modulationssignale kann durch beliebige, einem Fachmann als sinnvoll erscheinende, insbesondere unstetige, Funktionen oder signaltechnische Annäherungen an diese Funktionen ergänzt werden.

Über die geeignete Wahl eines der Amplitudenmodulation zu Grunde liegenden Modulationssignals lässt sich die Anzahl der in dem amplituden-modulierten Signal vorhandenen Amplituden festlegen: Während beispielsweise die Rechteckfunktion zwischen zwei Amplituden variiert, erlaubt eine Treppenfunktion oder eine Summe von Stufenfunktionen vorteilhaft eine Variation des resultierenden amplituden-modulierten Signals zwischen mehr als zwei Amplituden.

In einer vorteilhaften Ausführungsform des erfindungsgemäßen Verfahrens zur Erkennung einer Position eines mobilen Roboterfahrzeugs relativ zu einem einen definierten Bereich umgebenden Begrenzungsleiter ist das zeitabhängige Modulationssignal von Null verschieden.

Das Modulationssignal ist stets ungleich Null, entweder positiv oder negativ, und weist somit insbesondere keine Pausen und/oder Ruhezeiten auf.

In einer vorteilhaften Ausführungsform des erfindungsgemäßen Verfahrens zur Erkennung einer Position eines mobilen Roboterfahrzeugs relativ zu einem einen definierten Bereich umgebenden Begrenzungsleiter ist das Modulationssignal derart gewählt, dass das in dem Begrenzungsleiter bereitgestellte Stromsignal im Mittel weniger als ein definierter Wert beträgt, insbesondere weniger als 1000 mA, bevorzugt weniger als 800 mA, besonders bevorzugt weniger als 500 mA.

Durch geeignete Wahl des Modulationssignals, insbesondere hinsichtlich der durch das Modulationssignal beschriebenen Amplituden sowie deren zeitlicher Dauern, kann ein gwünschter mittlerer Strom, eine mittlere Energie und/oder eine mittlere Leistung des zur Erzeugung des elektromagnetischen Felds benötigten, auf den Begrenzungsleiter eingespeisten Stromsignals, realisiert werden. Vorteilhaft wird die mittlere Leistung, die während des Betriebs des autonomen Roboterfahrzeugs zur Durchführung des Verfahrens zur Erkennung der Position aufgebracht wird, reduziert, um Energie einzusparen und Interferenzsignale und/oder Störsignale zu reduzieren oder zu vermeiden. Erfindungsgemäß ist eine zuverlässige Erkennung der Position des mobilen Roboterfahrzeugs relativ zu dem den definierten Bereich umgebenden Begrenzungsleiter trotz reduzierter Sende- bzw. Betriebsleistung möglich. Bevorzugt wird ein Zielwert des mittleren Stromsignals von unter 500 mA verwendet, um vorteilhaft eine Störung von in der Umgebung des durch den Begrenzungsleiter definierten Bereichs befindlichen weiteren Roboterfahrzeugen in anderen Bereichen auszuschließen.

In einer vorteilhaften Ausführungsform des erfindungsgemäßen Verfahrens zur Erkennung einer Position eines mobilen Roboterfahrzeugs relativ zu einem einen definierten Bereich umgebenden Begrenzungsleiter ist das pseudo-zufällige Begrenzungssignal ein binäres Signal mit einer quasi-zufälligen Abfolge von binären Pegeln und weist ein, insbesondere periodisches, Bitmuster auf, das so ausgewählt ist, dass eine Länge eines Abschnitts des, insbesondere periodischen, Bitmusters, der zu einem gleich langen Abschnitt des invertierten Bitmusters identisch ist, bezüglich der gesamten Länge des Bitmusters einen vorgegebenen Anteil unterschreitet.

Ein binäres Begrenzungssignal ist vorteilhaft auf einfache Weise, beispielsweise mit Hilfe eines Schieberegisters und Logikgatters, z.B. einem Exklusiv-ODER-Gatter, erzeugbar.

Wesentlich für verwendete periodische pseudo-zufällige Begrenzungssignale, insbesondere periodische pseudo-zufällige binäre Begrenzungssignale, ist, dass bei einer periodischen Wiederholung des zufälligen Signalmusters des Begrenzungssignals keine Abschnitte des Signalmusters mit Abschnitten des inversen Signalmusters, bei dem Logikpegel des Signalmusters jeweils invertiert sind, identisch sind. Um eine ausreichende Diskriminierung im Rahmen des Mustererkennungsverfahrens, insbesondere des Korrelationsverfahrens, zu erreichen, darf die Länge des zu dem inversen Signalmuster identischen Abschnitts des Signalmusters einen vorgegebenen Anteil bezogen auf die Länge des gesamten Signalmusters nicht übersteigen. Auf diese Weise kann sichergestellt werden, dass stets und unabhängig von der Signalfolge des Begrenzungssignals eine Bestimmung der Position des mobilen Roboterfahrzeugs relativ zu dem den definierten Bereich umgebenden Begrenzungsleiter, d.h. eine Position innerhalb oder außerhalb dieses Begrenzungsleiters, mittels des Mustererkennungsverfahrens, insbesondere mittels des Korrelationsverfahrens, insbesondere der Bestimmung des Korrelationswerts zwischen dem Referenzsignal und dem rekonstruierten Begrenzungssignal, möglich ist.

In einer vorteilhaften Ausführungsform des erfindungsgemäßen Verfahrens zur Erkennung einer Position eines mobilen Roboterfahrzeugs relativ zu einem einen definierten Bereich umgebenden Begrenzungsleiter ist das pseudo-zufällige Begrenzungssignal ein Manchester-kodiertes binäres Signal mit einer quasi-zufälligen Abfolge von binären Pegeln und weist ein, insbesondere periodisches, Bitmuster, insbesondere ein periodisches 5-bit Bitmuster, auf, wobei die Taktfrequenz insbesondere 5 kHz beträgt.

Durch Manchester-Kodierung wird eine steigende Flanke, insbesondere eine Null/Eins-Folge oder eine Minus-Eins/Eins-Folge des binären Begrenzungssignals, beispielsweise einer logischen Null zugewiesen, während eine fallende Flanke, insbesondere eine Eins/Null-Folge oder eine Eins/Minus-Eins-Folge des binären Begrenzungssignals, beispielsweise einer logischen Eins zugewiesen wird. Somit kann auf einfache Weise realisiert werden, dass stets Pegelwechsel zur Taktrückgewinnung im Rahmen der Rekonstruktion des Begrenzungssignals vorhanden sind sowie das resultierende Manchesterkodierte binäre Signal ein reines digitales Binärsignal darstellt. Ferner wird mittels Manchester-Kodierung vorteilhaft die Bandbreite des binären Bitmusters reduziert.

In einer vorteilhaften Ausführungsform des erfindungsgemäßen Verfahrens zur Erkennung einer Position eines mobilen Roboterfahrzeugs relativ zu einem einen definierten Bereich umgebenden Begrenzungsleiter wird das pseudo-zufällige Begrenzungssignal nach einer Zeitdauer, die der Phasenlänge des Modulationssignals entspricht, zurückgesetzt.

Unter "Begrenzungssignal zurücksetzen" soll insbesondere verstanden werden, dass der zeitabhängige Verlauf des Begrenzungssignals, das verfahrensgemäß durch einen Stromgenerator als ein amplituden-moduliertes Stromsignal auf den Begrenzungsleiter eingespeist wird, nach einer Zeitdauer von Vorne beginnt, die der Phasenlänge des Modulationssignals entspricht. Beispielsweise kann diese Zurücksetzung parallel zu der steigenden Flanke des hoch-amplitudigen Signal-Abschnitts des Modulationssignals erfolgen, sodass mit Beginn jedes hoch-amplitudigen Signalabschnitts, insbesondere mit jedem periodisch wiederkehrenden hoch-amplitudigen Signalabschnitt, ebenfalls das Begrenzungssignal erneut beginnt.

Vorteilhaft kann unter dieser Voraussetzung auf eine Synchronisation des Referenzsignals auf das rekonstruierte Begrenzungssignal oder umgekehrt (Berechnung des Korrelationswertes bei verschiedenen Zeitversatzen zwischen Referenzsignal und rekonstruiertem Begrenzungssignal) verzichtet werden, da eine Zeitsynchronisation bereits mit der Phasenlänge des Modulationssignals erfolgt. Beispielsweise kann mit jeder steigenden Flanke des hoch-amplitudigen Signal-Abschnitts der Beginn des Begrenzungssignals angezeigt sein. Besonders vorteilhaft kann auf diese Weise eine technisch einfache, schnelle und wirtschaftlich vorteilhafte Mustererkennung realisiert werden. Insbesondere kann die Mustererkennung mit besonders geringem Rechenaufwand und geringen Anforderungen an eine Auswerteeinheit, insbesondere eine Auswerteelektronik, in dem mobilen Roboterfahrzeug durchgeführt werden.

In einer vorteilhaften Ausführungsform des erfindungsgemäßen Verfahrens zur Erkennung einer Position eines mobilen Roboterfahrzeugs relativ zu einem einen definierten Bereich umgebenden Begrenzungsleiter wird der zeitliche Korrelationsversatz zwischen dem Referenzsignal und dem rekonstruierten Begrenzungssignal ermittelt, indem mehrere Korrelationswerte bei verschiedenen zeitlichen Versatzen bestimmt werden, und der zeitliche Korrelationsversatz als der zeitliche Versatz bei dem betragsmäßig größten Korrelationswert bestimmt.

Auf diese Weise lässt sich durch Vergleich der Ergebnisse aus den Korrelationswerten, beispielsweise mittels einer Maximumsuche oder einer Schwellwertbetrachtung, eine Zeitverschiebung zwischen dem Referenzsignal und dem rekonstruierten Begrenzungssignal als zeitlicher Korrelationsversatz bestimmen und eine Synchronisation der beiden Signale durch Zeitverschiebung eines der Signale realisieren. Insbesondere kann ein einmal berechneter Korrelationsversatz auch zur Berechnung weiterer Korrelationswerte verwendet werden.

In einer vorteilhaften Ausführungsform des erfindungsgemäßen Verfahrens zur Erkennung einer Position eines mobilen Roboterfahrzeugs relativ zu einem einen definierten Bereich umgebenden Begrenzungsleiter wird in Abhängigkeit der ermittelten Position relativ zum Begrenzungsleiter, insbesondere bei Verlassen des durch den Begrenzungsleiter definierten Bereichs, mindestens eine Funktion bei dem mobilen Roboterfahrzeug ausgelöst.

Auf diese Weise wird eine Verknüpfung der Position des Roboterfahrzeugs mit seiner Funktionalität hinsichtlich des zu bearbeitenden Bereichs realisiert. Diverse Ausführungsformen sind denkbar, in denen eine Funktion des Roboterfahrzeugs, insbesondere eine Funktion im Zusammenhang mit dessen Navigation und/oder dessen Ausführung von Arbeiten, entsprechend der ermittelten Position des Roboterfahrzeugs beeinflusst wird. Vielfältige derartige Funktionen sind denkbar und könnten beispielsweise eine Richtungsveränderung, insbesondere eine Richtungsumkehr, bei Erreichen des Begrenzungsleiters, ein Ein- oder Ausschalten der Bearbeitung bei Überqueren des Begrenzungsleiters, das Aussenden von Informationen abhängig von der Position oder dergleichen realisieren.

In einer vorteilhaften Ausführungsform des erfindungsgemäßen Verfahrens zur Erkennung einer Position eines mobilen Roboterfahrzeugs relativ zu einem einen definierten Bereich umgebenden Begrenzungsleiter wird eine Bewegung des mobilen Roboterfahrzeugs nur innerhalb des durch den Begrenzungsleiter umgebenen Bereichs zugelassen und bei Erreichen des Begrenzungsleiters eine Richtungsänderung des mobilen Roboterfahrzeugs durchgeführt.

Vorteilhaft wird der Bewegungsspielraum des mobilen Roboterfahrzeugs somit auf den durch den Begrenzungsleiter definierten Bereich eingeschränkt. Ferner ist eine Notstopp-Funktion denkbar, die eine Weiterfahrt und/oder eine Bearbeitungsfunktion des Roboterfahrzeugs beendet, sollte eine Richtungsänderung des Roboterfahrzeugs wieder in den Bereich hinein (alternativ aus dem Bereich hinaus) nicht erfolgreich sein. So kann beispielsweise ein eine Bearbeitungsfläche bearbeitendes Roboterfahrzeug seine Bearbeitung und/oder seine Weiterfahrt unterbrechen, sollte sich das Roboterfahrzeug für zumindest eine bestimmte zeitliche Dauer außerhalb (alternativ auch innerhalb) des Begrenzungsleiters befinden, z.B. auf Grund einer technischen Panne, eines Hindernisses, einer sinkenden Leistungsfähigkeit der Stromversorgung des Roboterfahrzeugs oder dergleichen.

In einer vorteilhaften Ausführungsform des erfindungsgemäßen Verfahrens zur Erkennung einer Position eines mobilen Roboterfahrzeugs relativ zu einem einen definierten Bereich umgebenden Begrenzungsleiter führt das mobile Roboterfahrzeug eine Richtungsänderung in Richtung des Begrenzungsleiters aus, wenn die Position des Roboterfahrzeugs relativ zum Begrenzungsleiter als innerhalb oder außerhalb des Bereichs erkannt wird.

Unter "Richtungsänderung in Richtung des Begrenzungsleiters" soll insbesondere verstanden werden, dass das Roboterfahrzeug nach Überqueren des Begrenzungsleiters eine Wende derart ausführt, dass es sich anschließend wieder auf den Begrenzungsleiter zu bewegt, insbesondere unter einem Winkel zu dem Begrenzungsleiter, der bevorzugt nicht senkrecht auf den Begrenzungsleiter ausgerichtet ist, wieder auf den Begrenzungsleiter zu bewegt, sodass bei wiederholter Richtungsänderung in Richtung des Begrenzungsleiters folglich eine Zick-Zack-Bewegung des Roboterfahrzeugs entlang des Begrenzungsleiters erfolgt.

Auf diese Weise kann eine Nachverfolgung des den Bereich definierenden Begrenzungsleiters durch das Roboterfahrzeug einfach realisiert werden, wie sie beispielsweise zur Feststellung des Bereichs, insbesondere dessen Grenzen, im Rahmen einer Kartierung des Bereichs durchgeführt wird. Besonders vorteilhaft ist in unmittelbarer Nähe des Roboterfahrzeugs zum Begrenzungsleiter das zeitabhängige durch das Stromsignal in dem Begrenzungsleiter erzeugte elektromagnetische Feld vollständig ohne Unterbrechungen detektierbar, insbesondere dessen langreichweitige und kurzreichweitige Signalanteile, sodass eine Nachverfolgung des Begrenzungsleiters besonders präzise und mit hoher zeitlicher Auflösung (ohne Unterbrechungen) realisierbar ist. Folglich lässt sich der Rand des Bereichs vorteilhaft sehr präzise bestimmen, sodass für folgende Arbeitsschritte des Roboterfahrzeugs eine zuverlässige Bearbeitung bis an diesen Rand heran möglich ist.

Erfindungsgemäß wird auch ein mobiles, insbesondere autonomes, Roboterfahrzeug vorgeschlagen, das seine Position relativ zu einem einen definierten Bereich umgebenden Begrenzungsleiter nach dem erfindungsgemäßen Verfahren erkennt und zumindest aufweist:
- eine Detektoreinheit zum Detektieren eines sich ändernden magnetischen Felds, erzeugt durch ein in einem Begrenzungsleiter unter Verwendung eines bereitgestellten pseudo-zufälligen Begrenzungssignals eingespeistes Stromsignal, sowie Erzeugen eines Empfangssignals aus einer detektierten Magnetfeldänderung,
- einen Referenzsignalgeber zum Bereitstellen eines Referenzsignals, das ein im Wesentlichen identisches Bitmuster aufweist wie das bereitgestellte Begrenzungssignal,
- eine Auswerteeinheit, die ausgebildet ist, unter Verwendung des Empfangssignals ein rekonstruiertes Begrenzungssignal zu generieren, ein Mustererkennungsverfahren, insbesondere ein Korrelationsverfahren, durchzuführen, um einen Korrelationswert zwischen dem Referenzsignal und dem rekonstruierten Begrenzungssignal zu ermitteln, und eine Position relativ zu dem Begrenzungsleiter, insbesondere eine Position innerhalb oder außerhalb des durch den Begrenzungsleiter umgebenen Bereichs, abhängig von dem ermittelten Korrelationswert zu bestimmen.

Die Detektoreinheit ist vorgesehen, Magnetfeldänderungen, die auf das durch das in dem Begrenzungsleiter eingespeiste Stromsignal erzeugte elektromagnetische Feld zurückgehen, zu detektieren und aus diesen detektierten Magnetfeldänderungen ein Empfangssignal zu erzeugen. Beispielsweise kann mittels einer Detektionsspule eine Magnetfeldänderung in Form einer durch die Magnetfeldänderung induzierten elektrischen Spannung in der Detektionsspule detektiert und unmittelbar als Empfangssignal zur weiteren Verarbeitung insbesondere der Auswerteeinheit zur Verfügung gestellt werden. Alternativ und/oder zusätzlich kann eine andere, einem Fachmann als sinnvoll erscheinende Vorrichtung zur Detektion einer Magnetfeldänderung Verwendung finden, beispielsweise Hallsensoren, Feldplatten (Magnetic Dependent Resistor (MDR)), Magnetometer, Kerr-Magnetometer, Protonenmagnetometer, SQUIDs oder dergleichen.

Unter "vorgesehen" soll insbesondere speziell "programmiert", "ausgelegt" und/oder "ausgestattet" verstanden werden. Darunter, dass ein Objekt zu einer bestimmten Funktion "vorgesehen" ist, soll insbesondere verstanden werden, dass das Objekt diese bestimmte Funktion in zumindest einem Anwendungs- und/oder Betriebszustand erfüllt und/oder ausführt oder dazu ausgelegt ist, die Funktion zu erfüllen.

Der Referenzsignalgeber zur Bereitstellung des Referenzsignals kann auf unterschiedliche Weise realisiert sein, insbesondere in Form eines Zufallszahlengenerators (in einfacher Weise beispielsweise mit Hilfe eines Schieberegisters und Logikgatter, wie z.B. einem Exklusiv-ODER-Gatter) oder als eine eine Speichereinheit auslesende Vorrichtung, die nach Auslesen einer Signalabfolge aus der Speichereinheit, die ein im Wesentlichen identisches Bitmuster aufweist wie das bereitgestellte Begrenzungssignal, das Referenzsignal zur Verfügung stellt. Alternativ kann das Referenzsignal auch mittels einer Datenkommunikationsschnittstelle von dem Begrenzungssignalgenerator übertragen werden, insbesondere kabellos übertragen werden.

Unter der Auswerteeinheit zur Auswertung von von der Detektoreinheit gelieferten Empfangssignalen soll zumindest eine Vorrichtung verstanden werden, die einen Informationseingang zur Annahme der Empfangssignale der Detektoreinheit, eine Informationsverarbeitungseinheit zur Bearbeitung, insbesondere Auswertung der angenommenen Empfangssignale, sowie eine Informationsausgabe zur Weitergabe der bearbeiteten und/oder ausgewerteten Empfangssignale aufweist. Vorteilhaft weist die Auswerteeinheit Komponenten auf, die zumindest einen Prozessor, einen Speicher und ein Betriebsprogramm mit Auswerte- und Berechnungsroutinen umfassen. Insbesondere können die elektronischen Bauteile der Auswerteeinheit auf einer Platine (Leiterplatte) angeordnet sein, bevorzugt auf einer gemeinsamen Platine mit der Steuervorrichtung, besonders bevorzugt in Form eines Mikrokontrollers. Insbesondere kann die Auswerteeinheit auch als Bestandteil einer Steuervorrichtung des autonomen Roboterfahrzeugs ausgeführt sein. Die Auswerteeinheit ist vorgesehen, aus den von der Detektoreinheit erhaltenen Empfangssignalen das Begrenzungssignal zu rekonstruieren, ein Mustererkennungsverfahren, insbesondere ein Korrelationsverfahren, zwischen dem rekonstruierten Begrenzungssignal und einem Referenzsignal auszuführen und daraus zumindest eine Erkennung der Position des Roboterfahrzeugs bezüglich des den Bereich definierenden Begrenzungsleiters durchzuführen.

Das mobile Roboterfahrzeug weist ferner eine Steuervorrichtung zur Ansteuerung der verschiedenen Komponenten des Roboterfahrzeugs auf. Unter der Steuervorrichtung soll insbesondere eine Vorrichtung mit zumindest einer Steuerelektronik verstanden werden, die Mittel zur Kommunikation mit den anderen Komponenten des Roboterfahrzeugs, beispielsweise Mittel zur Steuerung und Regelung der Detektoreinheit, der Auswerteeinheit, einer Antriebseinheit, und/oder Mittel zur Datenverarbeitung und/oder weitere, dem Fachmann als sinnvoll erscheinende Mittel aufweist. Insbesondere ist die Steuervorrichtung dazu vorgesehen, zumindest einen Betriebsfunktionsparameter des Roboterfahrzeugs, insbesondere betreffend einer Navigation und/oder einer Bewegung des Roboterfahrzeugs, in Abhängigkeit von zumindest einer detektierten Signalgröße und/oder einem Auswerteergebnis der Auswerteeinheit einzustellen.

Vorteilhaft kann unter der Steuerelektronik der erfindungsgemäßen Steuervorrichtung eine Prozessoreinheit in Verbindung mit einer Speichereinheit sowie mit einem in der Speichereinheit gespeicherten Betriebsprogramm verstanden werden, das während des Steuervorgangs ausgeführt wird. Insbesondere können die elektronischen Bauteile der Steuervorrichtung auf einer Platine (Leiterplatte) angeordnet sein, bevorzugt in Form eines Mikrokontrollers. Besonders vorteilhaft kann die Steuervorrichtung darüber hinaus dazu vorgesehen sein, das gesamte Roboterfahrzeug zu steuern und dessen Betrieb zu ermöglichen. Dazu ist die Steuervorrichtung vorgesehen, mit den anderen Komponenten des Roboterfahrzeugs, insbesondere der Detektoreinheit, der Auswerteeinheit, der Antriebseinheit, einer Speichereinheit, einer Datenkommunikationsschnittstelle und dergleichen, zu kommunizieren.

Erfindungsgemäß wird ferner ein System zur Durchführung des erfindungsgemäßen Verfahrens, insbesondere zum Erkennen einer Position relativ zu einem einen definierten Bereich umgebenden Begrenzungsleiter, vorgeschlagen, das zumindest umfasst:
- einen Begrenzungsleiter,
- ein erfindungsgemäßes mobiles Roboterfahrzeug,
- einen Signalgenerator zur Einspeisung eines Stromsignals in den Begrenzungsleiter.

Insbesondere kann der Signalgenerator einen Begrenzungssignalgenerator sowie einen Stromgenerator umfassen bzw. als eine Kombination solcher ausgebildet sein.

In einer vorteilhaften Ausführungsform des erfindungsgemäßen Systems ist der Signalgenerator dazu vorgesehen, ein Stromsignal in dem Begrenzungsleiter, der den definierten Bereich umgibt, entsprechend einem bereitgestellten pseudo-zufälligen Begrenzungssignal bereitzustellen, wobei das Stromsignal amplituden-moduliert ist.

### Zeichnungen

Die Erfindung ist anhand von in den Zeichnungen dargestellten Ausführungsbeispielen in der nachfolgenden Beschreibung näher erläutert. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Gleiche Bezugszeichen in den Figuren bezeichnen gleiche Elemente.

### Es zeigen:

- Figur 1: schematische Darstellung einer Ausführungsform eines erfindungsgemäßen Systems bestehend aus Begrenzungsleiter, mobilem Roboterfahrzeug und Signalgenerator,
- Figur 2: schematische Darstellung einer alternativen Ausführungsform eines erfindungsgemäßen Systems bestehend aus Begrenzungsleiter, mobilem Roboterfahrzeug und Signalgenerator, wobei der Begrenzungsleiter einen Bereich definiert, der ein innenliegendes Flächenstück ausspart,
- Figur 3: perspektivische Darstellung einer Ausgestaltung eines erfindungsgemäßen mobilen Roboterfahrzeugs,
- Figur 4: vereinfachte, beispielhafte Darstellung zeitlicher Verläufe
(a) eines periodischen binären Begrenzungssignals,
(b) eines Modulationssignals,
(c) eines in einen Begrenzungsleiter eingespeisten amplitudenmodulierten Stromsignals,
(d) der von der Detektoreinheit des mobilen Roboterfahrzeugs zu vermessenden magnetischen Feldstärke,
(e) eines rekonstruierten Begrenzungssignals, wie es in unmittelbarer Nähe des Roboterfahrzeugs zum Begrenzungsleiter resultiert,
(f) eines rekonstruierten Begrenzungssignals, wie es in größerer Entfernung des Roboterfahrzeugs zum Begrenzungsleiter resultiert und
(g) eines von einem Referenzsignalgenerator des mobilen Roboterfahrzeugs bereitgestellten Referenzsignals,

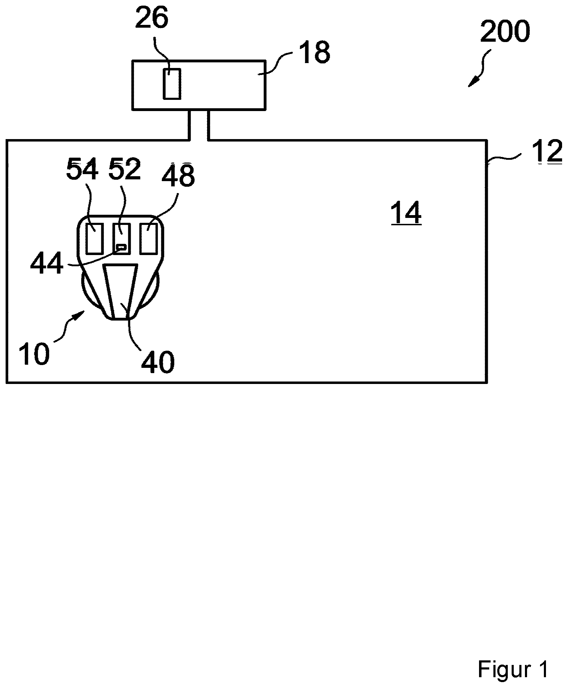

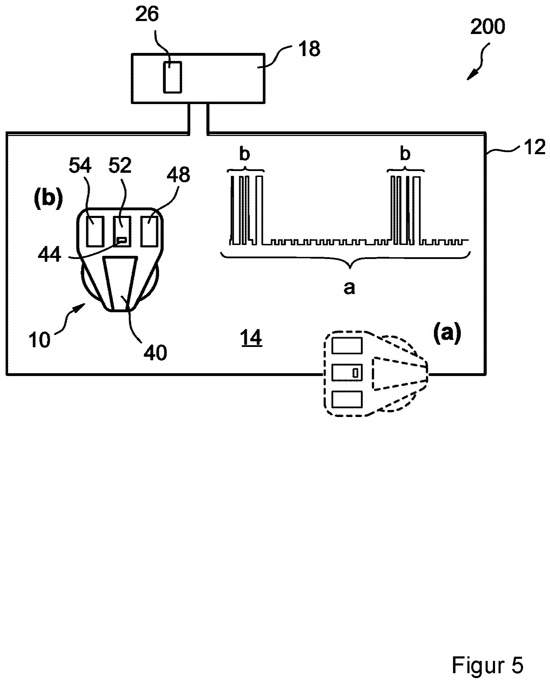

- Figur 5: schematische Darstellung aus Figur 1, wobei das mobile Roboterfahrzeug sich (a) am Rande und (b) im Inneren des durch den Begrenzungsleiter definierten Bereichs befindet,

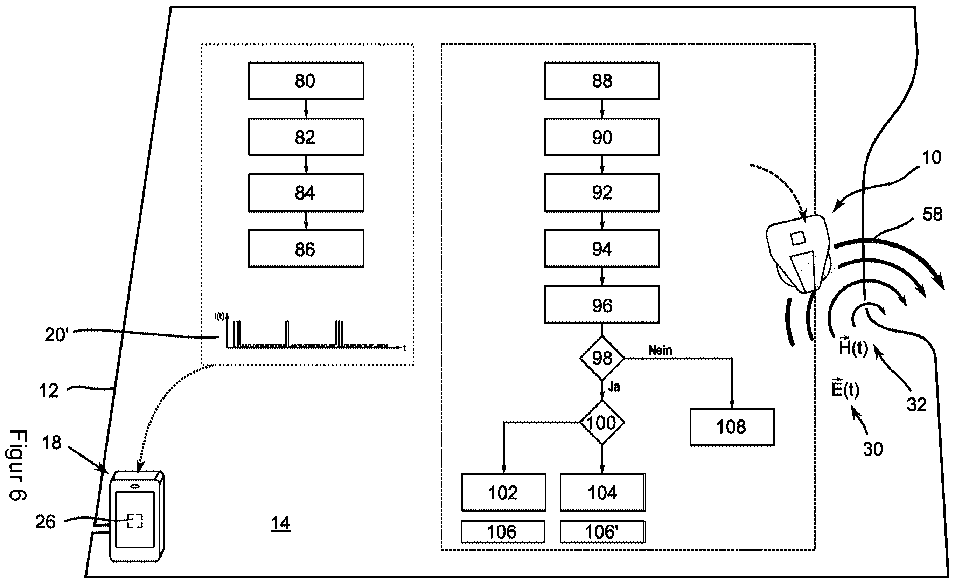

- Figur 6: Flussdiagramm zur Darstellung einer Ausführungsform des erfindungsgemäßen Verfahrens zum Erkennen einer Position eines mobilen Roboterfahrzeugs bezüglich einem einen Bereich definierenden Begrenzungsleiter.

### Beschreibung der Ausführungsbeispiele

Das erfindungsgemäße Verfahren und ein erfindungsgemäßer Gegenstand betreffen im allgemeinen mobile Roboterfahrzeuge, die dazu ausgelegt sind festzustellen, ob sie sich innerhalb oder außerhalb eines definierten Bereichs befinden. Insbesondere können diese mobilen Roboterfahrzeuge zur Verrichtung von Arbeiten und/oder Überwachungsaufgaben vorgesehen sein. Beispiele solcher mobilen Roboterfahrzeuge stellen automatische oder halbautomatische Arbeitsgeräte dar, die geeignet sind, eine Bodenbearbeitung in einem bestimmten Bereich durchzuführen, wie beispielsweise Rasen mähen, Rasen vertikutieren, Laub sammeln, bewässern, düngen, Schnee räumen, Staub saugen, Boden wischen, Boden waschen, Boden polieren und dergleichen.

Die folgende Beschreibung der Ausführungsbeispiele der Erfindung bezieht sich auf ein automatisches, autonomes mobiles Roboterfahrzeug, insbesondere einen Rasenmähroboter, wobei die Erfindung nicht auf ein solches System beschränkt ist.

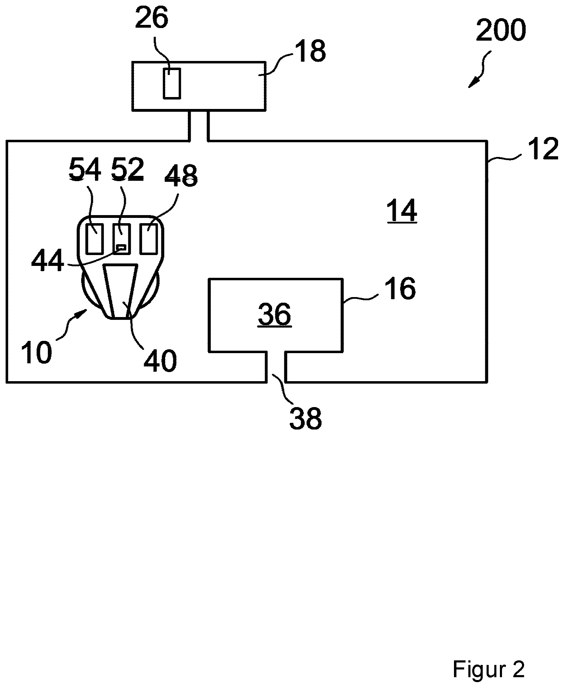

Figuren 1 und 2 zeigen jeweils eine mögliche Ausführungsform eines erfindungsgemäßen Systems 200 bestehend aus einem mobilen Roboterfahrzeug 10, das sich innerhalb eines durch einen Begrenzungsleiter 12 definierten Bereichs 14, insbesondere Arbeitsbereichs, befindet. Der Begrenzungsleiter 12 ist als Draht in Form einer Leiterschleife ausgebildet, sodass in seinem Inneren ein Bereich 14, den das mobile Roboterfahrzeug nicht verlassen soll, insbesondere ein durch das Roboterfahrzeug 10 zu bearbeitender Arbeitsbereich, definiert ist. Vorzugsweise ist der Begrenzungsleiter 12 in den Boden eingelassen oder unmittelbar darauf ausgelegt und/oder angebracht. Erreicht das mobile Roboterfahrzeug 10 den Begrenzungsleiter 12, ist vorteilhaft vorgesehen, dass eine Funktion in dem autonomen Roboterfahrzeug 10 ausgeführt wird. Diese Funktion kann beispielsweise eine Fahrtrichtungsänderung, insbesondere eine Fahrtrichtungsumkehr, eine Änderung von Parametern betreffend eine Bearbeitung des befahrenen Bereichs 14, eine Notstoppfunktion oder dergleichen sein.

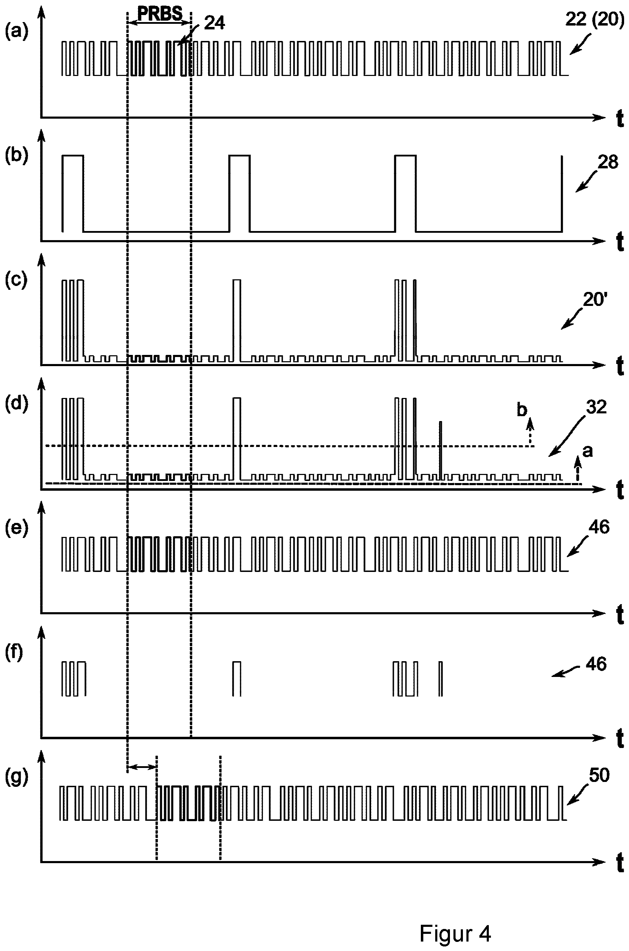

Der Begrenzungsleiter 12 ist mit einem Generator 18 zur Erzeugung eines elektrischen Stroms 20 verbunden. Bevorzugt wird ein Stromsignal 20' (vergleiche Figur 4c), wie nachfolgend beschrieben, unter Verwendung eines dem Stromgenerator 18 bereitgestellten Begrenzungssignals 22 (vergleiche Figur 4a) generiert, das insbesondere einer periodischen pseudo-zufälligen binären 5-Bit Signalabfolge 24 entspricht. Die pseudo-zufällige binäre Signalabfolge 24 des Begrenzungssignals 22 wird hierbei mittels eines Zufallszahlengenerators 26 erzeugt. Darüber hinaus ist das pseudo-zufällige binäre Begrenzungssignal 22 Manchester-kodiert.

Besonders vorteilhaft ist der elektrische Strom 20 und/oder das pseudo-zufällige Begrenzungssignal 22 in dem erfindungsgemäßen Verfahren mit einem Modulationssignal 28 (vergleiche Figur 4b) amplituden-moduliert, sodass das resultierende, in den Begrenzungsleiter 12 eingespeiste Stromsignal 20' eine entsprechend dem Modulationssignal 28 veränderte zeitabhängige Amplitudeneigenschaft aufweist. Bevorzugt wird diese Modulation multiplikativ oder additiv aus dem ursprünglichen Begrenzungssignal 22 und/oder dem elektrischen Strom 20 sowie dem Modulationssignal 28 durchgeführt.

Der Stromfluss in dem Begrenzungsleiter 12, insbesondere das eingespeiste amplituden-modulierte Stromsignal 20', bewirkt, dass sich um den Begrenzungsleiter 12 ein zeitlich veränderliches elektromagnetisches Feld 30 ausbildet, wobei die Stärke und Richtung der magnetischen Feldkomponente 32 von der Stromstärke und Fließrichtung des in den Begrenzungsleiter 12 eingespeisten Stromsignals 20' abhängt. Insbesondere resultiert folglich ein dem in den Begrenzungsleiter 12 eingespeisten Stromsignal 20' korrespondierendes, folglich ebenfalls moduliertes elektromagnetisches Feld 30 mit einer magnetischen Feldkomponente 32 (vgl. Figur 6).

Aufgrund der Schleifenform des Begrenzungsleiters 12 sind die Magnetfeldlinien 58 des magnetischen Feldes 32 im gesamten durch den Begrenzungsleiter 12 definierten inneren Bereich 14 in eine erste Richtung gleichgerichtet (vergleich Figur 6; exakt gilt dies allerdings nur in der Ebene, die durch den Begrenzungsleiter 12 aufgespannt wird), während die Magnetfeldlinien 58 außerhalb des Begrenzungsleiters 12 in eine um 180° zur ersten Richtung gedrehten zweiten Richtung weisen. Das durch den stromdurchflossenen Begrenzungsleiter 12 emittierte elektromagnetische Feld 30, insbesondere dessen magnetische Feldstärke H (vergleiche Figur 6), nimmt mit radialem Abstand zu dem Begrenzungsleiter 12 sowie sinkender Stromstärke I in dem Begrenzungsleiter 12 proportional ab.

In Figur 2 ist eine weitere Ausgestaltung des Bereichs 14 dargestellt, bei der innerhalb des Bereichs 14 mittels einer weiteren Schlaufe 16 des Begrenzungsleiters 12 ein Inselbereich 36 definiert wird, der nicht zur Bearbeitung durch das autonome Roboterfahrzeug 10 vorgesehen ist. Insbesondere kann ein Abschnitt 38 des Begrenzungsleiters 12, der wie hier den Inselbereich 36 mit dem Außenrand des Bereichs 14 verbindet und zwei nahe beieinander befindliche Drahtleitungen des Begrenzungsleiters 12 aufweist, durch Interferenzeffekte unsichtbar sein, da die erzeugten magnetischen Wechselfelder 32 sich gegenseitig auslöschen können.

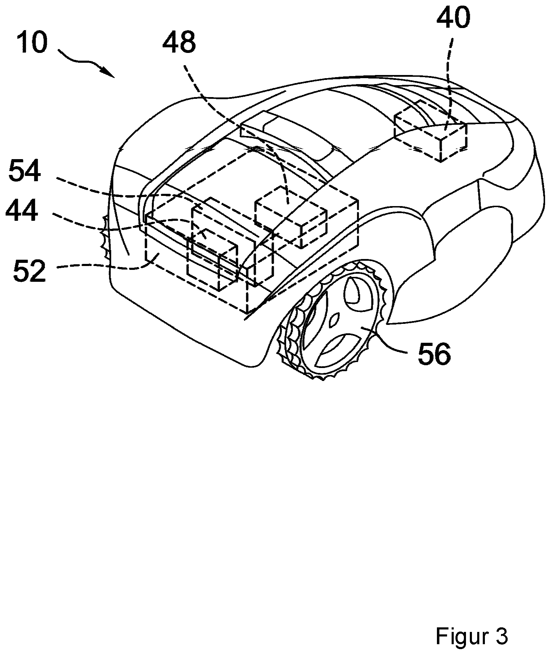

Das in den Figuren 1 und 2 schematisch und in Figur 3 in einer perspektivischen Ansicht ausführlicher dargestellte Roboterfahrzeug 10 weist zumindest eine Detektoreinheit 40 auf, um das durch den Begrenzungsleiter 12 erzeugte elektromagnetische Feld 30, insbesondere dessen magnetische Komponente 32 und deren Richtung, zu detektieren. Bevorzugt wird die Detektoreinheit 40 mit Hilfe zumindest einer Induktionsspule gebildet, in der ein insbesondere zeitlich veränderliches elektromagnetisches Feld 30, insbesondere dessen zeitlich veränderliche magnetische Komponente 32 (vergleiche Figur 4d), eine elektrische Spannung induziert. Diese induzierte Spannung wird als Empfangssignal (nicht näher dargestellt) von der Detektoreinheit 40 ausgegeben und vorteilhaft an eine Auswerteeinheit 44 weitergeleitet.

Die Auswerteeinheit 44 zur Auswertung von von der Detektoreinheit 40 gelieferten Empfangssignalen analysiert das von der Detektoreinheit 40 zugeleitete Empfangssignal und rekonstruiert aus dem Empfangssignal das in den Begrenzungsleiter 12 eingespeiste Begrenzungssignal 22, sodass ein rekonstruiertes Begrenzungssignal 46 (vergleiche Figur 4e,f) erhalten wird. Da Induktionsspulen nur Änderungen des Magnetfeldes 32 als Spannungsspitze detektieren können, werden in der Auswerteeinheit 44 die Spannungsspitzen entsprechend ihrem Vorzeichen als Pegelwechselsignale interpretiert. Vorteilhaft können bei Verwendung eines binären Begrenzungssignals 22 Spannungsspitzen des Empfangssignals als Pegelwechsel interpretiert werden. Die Auswerteeinheit 44 rekonstruiert auf diese Weise das dem Stromgenerator 18 bereitgestellte Begrenzungssignal 22 im mobilen Roboterfahrzeug 10 und stellt dieses als rekonstruiertes Begrenzungssignal 46 zur weiteren Verarbeitung zur Verfügung, insbesondere der Auswerteeinheit 44 zur Verfügung.

Das mobile Roboterfahrzeug 10 weist ferner einen Referenzsignalgenerator 48 auf, der ein Referenzsignal 50 (vergleiche Figur 4g) generiert, das in der Signalfolge - hier in der periodischen Abfolge von binären Pegeln - im Wesentlichen dem durch den Begrenzungssignalgenerator 26 vorgegebenen Begrenzungssignal 22 entspricht. In einer beispielhaften Ausführungsform umfasst der Referenzsignalgenerator 48 zumindest eine Speichereinheit und eine Speicherausleseeinheit, die zum Auslesen des auf der Speichereinheit gespeicherten Referenzsignals 50 sowie zu dessen Weitergabe an eine weitere Komponente des autonomen Roboterfahrzeugs 10, insbesondere an die Auswerteeinheit 44, dient. Eine zeitliche Synchronisation des Referenzsignals 50 mit dem Begrenzungssignal 22 besteht zumindest zum Zeitpunkt des Einschaltens des mobilen Roboterfahrzeugs 10 nicht notwendigerweise.

Der Begrenzungssignalgenerator 26, in einer exemplarischen Ausführungsform realisiert als Zufallszahlengenerator, und der Referenzsignalgenerator 48 in dem mobilen Roboterfahrzeug 10 generieren im Wesentlichen identische Signale - Begrenzungssignal 22 und Referenzsignal 50 -, die jeweils als pseudo-zufällige Signale aus einer pseudo-zufälligen, für das Begrenzungssignal 22 und das Referenzsignal 50 gleichen Signalabfolge einer vorgegebenen Anzahl von Bits bestehen (auch bekannt als "Pseudo Random Noise" oder auch "Pseudo Random Binary Signal"). Die pseudo-zufälligen Signale 22,50 werden bevorzugt periodisch bereitgestellt. Die Signale, die in dem Begrenzungssignalgenerator 26 und in dem Referenzsignalgenerator 48 generiert werden, sind zueinander nicht notwendigerweise synchronisiert und es gibt weder einen expliziten Anfangszeitpunkt noch ein Anfangsmuster.

In einer alternativen Ausführungsform kann vorgesehen sein, dass die in dem Begrenzungssignalgenerator 26 und in dem Referenzsignalgenerator 48 generierten Signale 22,50 zeitsynchronisiert werden. Dies kann beispielsweise realisiert werden, wenn der zeitabhängige Verlauf des Begrenzungssignals 22, das verfahrensgemäß durch den Stromgenerator 18 als ein amplituden-moduliertes Stromsignal 20' auf den Begrenzungsleiter 12 eingespeist wird, nach einer Zeitdauer von Vorne beginnt, die der Phasenlänge des Modulationssignals 28 entspricht. Beispielsweise kann diese Zurücksetzung parallel zu der steigenden Flanke des hoch-amplitudigen Signal-Abschnitts des Modulationssignals 28 erfolgen, sodass mit Beginn jedes hoch-amplitudigen Signalabschnitts, insbesondere mit jedem periodisch wiederkehrenden hoch-amplitudigen Signalabschnitt, ebenfalls das Begrenzungssignal 22 erneut beginnt. Vorteilhaft kann derart also der Beginn jedes hoch-amplitudigen Signalabschnitts des Empfangssignals als Taktgeber verstanden werden, der eine Synchronisation des Referenzsignals 50 auf das rekonstruierte Begrenzungssignal 46 ermöglicht.

Das mobile Roboterfahrzeug 10 weist des Weiteren eine Steuervorrichtung 52 zur Ansteuerung der verschiedenen Komponenten des Roboterfahrzeugs 10 auf, zumindest zur Ansteuerung der Detektoreinheit 40, der Auswerteeinheit 44, einer Antriebseinheit 54 und des Referenzsignalgenerators 48. Ferner ist die Steuervorrichtung 52 vorgesehen, eine Richtungsänderung des Roboterfahrzeugs 10 in Abhängigkeit der erkannten Position des Roboterfahrzeugs 10, d.h. insbesondere in Abhängigkeit eines Auswerteergebnisses der Auswerteeinheit 44, einzustellen. Die Steuerelektronik der Steuervorrichtung 52 umfasst zumindest eine Prozessoreinheit, eine Speichereinheit sowie ein in der Speichereinheit gespeichertes Betriebsprogramm, das während des Steuervorgangs ausgeführt wird.

Das autonome Roboterfahrzeug 10 weist ferner eine Antriebseinheit 54 auf, die vorgesehen ist, von der Steuervorrichtung 52 Steuersignale anzunehmen und basierend auf diesen Steuersignalen eine Bewegung des Roboterfahrzeugs 10 durchzuführen. Insbesondere weist die Antriebseinheit 54 zumindest einen Motor sowie Räder 56 auf, unter deren Verwendung sich das Roboterfahrzeug 10 über den Bereich 14 bewegt.

Eine Energieversorgungsvorrichtung (nicht näher dargestellt) dient der Energieversorgung des autonomen Roboterfahrzeugs 10.

In Figur 4 sind beispielhaft stark vereinfachte zeitabhängige Verläufe dargestellt für
a) ein periodisches binäres Begrenzungssignal 22 (alternativ auch ein unter Verwendung eines periodischen binären Begrenzungssignals 22 erzeugter Strom 20),
b) ein erfindungsgemäßes Modulationssignal 28,
c) ein durch Amplitudenmodulation des Begrenzungssignal 22 oder alternativ des elektrischen Stroms 20 amplituden-moduliertes, in den Begrenzungsleiter eingespeistes oder einzuspeisendes Stromsignal 20',
d) eine von der Detektoreinheit 40 des mobilen Roboterfahrzeugs 10 zu vermessende Feldstärke der magnetischen Feldkomponente 32,
e) ein rekonstruiertes Begrenzungssignal 46, wie es in unmittelbarer Nähe des Roboterfahrzeugs 10 zum Begrenzungsleiter 12 resultiert (vergleiche Figur 5a),
f) ein rekonstruiertes Begrenzungssignal 46, wie es in größerer Entfernung des Roboterfahrzeugs 10 zum Begrenzungsleiter 12 resultiert (vergleiche Figur 5b) und
g) ein von einem Referenzsignalgenerator 48 des mobilen Roboterfahrzeugs 10 bereitgestelltes Referenzsignal 50.

Insbesondere sei darauf hingewiesen, dass in Figur 4a-g idealisierte zeitabhängige Verläufe dargestellt sind, die zeitliche Versatze der Signale untereinander, die beispielsweise auf eine technische Umsetzung zurück gehen können (insbesondere beispielsweise kapazitive oder induktive Effekte), nicht berücksichtigt.

Figur 4a zeigt ein von dem Begrenzungssignalgenerator 26 erzeugtes Begrenzungssignal 22, das als Grundlage für das in den Begrenzungsleiter 12 einzuspeisende Stromsignal 20' dient. Das Begrenzungssignal 22 besteht aus einer pseudo-zufälligen Abfolge von binären Bits, wobei Abschnitte des pseudo-zufälligen Bitmusters mit Abschnitten des inversen pseudo-zufälligen Bitmusters, bei dem Logikpegel des Bitmusters jeweils invertiert sind, nur für eine zeitliche Länge identisch sind, die einen vorgegebenen Anteil bezogen auf die Länge des gesamten Bitmusters nicht übersteigt. Bevorzugt kann das pseudo-zufällige Bitmusters in einer Ausführungsform durch Einsatz eines linear gekoppelten Schieberegisters generiert werden. In einer alternativen Ausführungsform kann das in Figur 4a dargestellte Signal auch ein unter Verwendung eines periodischen binären Begrenzungssignals 22 erzeugter Strom 20 sein (signaltechnische Umsetzung des Begrenzungssignals 22 in einen technischen Strom 20).

Figur 4b zeigt ein erfindungsgemäßes Modulationssignal 28, das exemplarisch als periodische Stufenfunktion mit zwei von Null verschiedenen Amplitudenniveaus ausgeführt ist, die sich bevorzugt um einen Faktor größer als 100 zueinander unterscheiden und jeweils einen Signalabschnitt definieren. Besonders vorteilhaft sind die Zeitdauern der Signalabschnitte derart gewählt, dass der hoch-amplitudige Signalabschnitt eine kurze Dauer verglichen mit dem nieder-amplitudigen Signalabschnitt aufweist. Besonders bevorzugt ist der hoch-amplitudige Signalabschnitt um ca. einen Faktor 8-20 kürzer als der nieder-amplitudige Signalabschnitt gewählt. In einer beispielhaften Ausführungsform kann insbesondere beispielsweise der hoch-amplitudige Signalabschnitt eine zeitliche Dauer von 5-10 ms aufweisen, während der nieder-amplitudige Signalabschnitt 80-100 ms aufweist.

Figur 4c stellt den zeitlichen Verlauf eines durch Amplitudenmodulation des Begrenzungssignals 22 oder alternativ des elektrischen Stroms 20 amplituden-moduliertes, in den Begrenzungsleiter 12 eingespeisten Stromsignals 20' dar. Ein kontinuierlich gesendetes Signal 20' ohne Pausen ist erkennbar, das entsprechend dem Modulationssignal 28 aus Figur 4b zwei Signalanteile aufweist: einen zeitlich kurzen Signalanteil hoher Amplitude und einen zeitlich langen Signalanteil geringer Amplitude. Insbesondere sind die Amplituden und Zeitdauern der Signalabschnitte derart gewählt, dass der zeitlich gemittelte Strom des auf dem Begrenzungsleiter 12 eingespeisten Stromsignals 20' unter 1000 mA, bevorzugt unter 500 mA liegt. Erfindungsgemäß weist das Signal 20' in seinem gesamten zeitabhängigen Verlauf eine Signalabfolge auf, die der des Begrenzungssignals 22 entspricht.

Der theoretische zeitabhängige Verlauf des durch den Stromfluss in dem Begrenzungsleiter 12 erzeugten elektromagnetischen Feldes 30, insbesondere der Feldstärke der Magnetfeldkomponente 32, entspricht dem Verlauf des Stromsignals 20' und ist in Figur 4d gezeigt. Störsignale sind als kurze Signalüberhöhungen erkennbar. Insbesondere erzeugen Signalabschnitte hoher Strom-Amplitude des auf dem Begrenzungsleiter 12 eingespeisten amplituden-modulierten Stromsignals 20' (vergleich 4c) Magnetfelder 32 hoher Feldstärke und damit weiter Reichweite, während Signalabschnitte geringer Strom-Amplitude kurzreichweitige elektromagnetische Felder 30 erzeugen. Mittels der erfindungsgemäßen Amplitudenmodulation ist somit eine Erkennung der Position des mobilen Roboterfahrzeugs 10 relativ zu dem den definierten Bereich 14 umgebenden Begrenzungsleiter 12 in einem großen (geometrischen) Bereich 14 sichergestellt, bei erfindungsgemäßer Reduzierung der zur Erzeugung des elektromagnetischen Feldes 30 benötigten mittleren Energie und/oder Leistung. Die gestrichelten Linien (a,b) in Figur 4d stellen jeweils Signalschwellen dar, über die die Magnetfeldstärke hinausgehen muss, damit es durch die Detektoreinheit 40 detektiert wird.

Dabei kennzeichnet Signalschwelle a, ab welcher Magnetfeldstärke, d.h. ab welcher Signalintensität, das Roboterfahrzeug 10 in unmittelbarer Nähe (vergleiche Figur 5a) zum Begrenzungsleiter 12 eine Magnetfeldänderung detektiert. Durch die kurze Distanz zwischen Roboterfahrzeug 10 und Begrenzungsleiter 12 kann die Detektoreinheit 40 selbst die aus den niedrigamplitudigen Signalabschnitten des eingespeisten Stromsignals 20' erzeugten schwachen Magnetfeldstärken der Magnetfeldkomponente 32 detektieren, sodass eine Detektion des zu Grunde liegenden Begrenzungssignals 22 für den gesamten dargestellten zeitabhängigen Verlauf möglich ist.

Dem gegenüber stellt die Signalschwelle b dar, ab welcher Magnetfeldstärke das Roboterfahrzeug 10 in größerer Entfernung (vergleich Figur 5b) zum Begrenzungsleiter 12 eine Magnetfeldänderung detektiert. Durch die größere Distanz ist nur noch ein reduzierter Anteil des ausgesendeten elektromagentischen Feldes 30 in größerer Entfernung des Roboterfahrzeugs 10 von dem Begrenzungsleiter 12 detektierbar. Insbesondere kann auf Grund der größeren Distanz lediglich der langreichweitige Anteil des elektromagnetischen Feldes 30 mit einer hohen Signalstärke detektiert werden. Dies bedeutet, dass für die Erkennung der Position des Roboterfahrzeugs 10 in größerer Entfernung des Roboterfahrzeugs 10 von dem Begrenzungsleiter 12 lediglich die hoch-amplitudigen Signalabschnitte des auf den Begrenzungsleiter 12 eingespeisten Stromsignals 20' relevant und nutzbar sind. Mögliche Amplituden des hoch-amplitudigen Signalabschnitts des auf den Begrenzungsleiter 12 eingespeisten Stromsignals 20' betragen beispielsweise 1-5 A, bevorzugt 1-4 A, während niedrig-amplitudige Signalabschnitt eine Amplitude von beispielsweise 10-50 mA aufweisen.

Während also in größerer Entfernung lediglich hoch-amplitudige Signalabschnitte zur Bestimmung der Position Verwendung finden, kann in kurzer Distanz des Roboterfahrzeugs 10 zu dem Begrenzungsleiter 12 der gesamte zeitabhängige Verlauf des Signals 22 rekonstruiert und genutzt werden. Dies resultiert in einer erhöhten zeitlichen Auflösung des Verfahrens zur Erkennung der Position des Roboterfahrzeugs 10 bezüglich des den Bereich 14 definierenden Begrenzungsleiters 12 im Falle einer kurzen Distanz des Roboterfahrzeugs 10 zum Begrenzungsleiter 12. Besonders vorteilhaft kann auf diese Weise eine präzise Nachverfolgung des Begrenzungsleiters 12 durch das Roboterfahrzeug 10 erreicht werden, beispielsweise zur Feststellung des durch den Begrenzungsleiter 12 definierten Bereichs 14, insbesondere dessen Grenzen, im Rahmen einer Kartierung des Bereichs 14.

Figuren 4e und 4f zeigen aus dem Empfangssignal rekonstruierte, mit je einer leichten Störungen behaftete Begrenzungssignale 46 für ein in unmittelbarer Nähe zum Begrenzungsleiter 12 befindliches Roboterfahrzeug 10 (vergleich Figur 5a) bzw. für ein in großer Entfernung befindliches Roboterfahrzeug 10 (vergleich Figur 5b). Entsprechend der diskutierten Signalschwellen sind die gemessenen Empfangssignale der Detektoreinheit 40 und somit die rekonstruierten Begrenzungssignale 46 unterschiedlich.

In Figur 4g ist abschließend ein Referenzsignal 50 dargestellt, wie es mittels des Referenzsignalgenerators 48 erzeugt wird. Da der Referenzsignalgenerator 48 das Referenzsignal 50 auf die gleiche Weise wie der Begrenzungssignalgenerator 26 erzeugt oder alternativ eine abgespeicherte Signalfolge, die dem Bitmuster des Begrenzungssignal 22 entspricht, aus einer Speichereinheit ausliest, besitzt das Referenzsignal 50 die gleiche Abfolge von Bits mit der gleichen Signalfrequenz wie das Begrenzungssignal 22. Da das Begrenzungssignal 22 und das Referenzsignal 50 nicht notwendigerweise synchronisiert sind, sind das Referenzsignal 50 und das Begrenzungssignal 22 um einen zeitlichen Versatz gegeneinander verschoben dargestellt.

Das Verfahren zum Erkennen der Position des Roboterfahrzeugs 10 bezüglich des Bereichs 14, d.h. zum Erkennen, ob sich das Roboterfahrzeug 10 innerhalb oder außerhalb des durch den Begrenzungsleiter 12 definierten Bereichs 14 befindet, wird nachfolgend in Verbindung mit dem Flussdiagramm der Figur 6 beschrieben.

Zunächst wird in Verfahrensschritt 80 mittels des Begrenzungssignalgenerators 26, insbesondere dem Zufallszahlengenerator, ein Begrenzungssignal 22 erzeugt, welches in Verfahrensschritt 82 unter Verwendung eines Modulationssignals 28 amplituden-moduliert wird. Dieses amplituden-modulierte Begrenzungssignal 22' wird durch den Stromgenerator 18 in Schritt 84 in ein elektrisches Stromsignal 20' umgesetzt und in den Begrenzungsleiter 12 eingespeist, sodass in unmittelbarer Folge ein zeitlich veränderliches elektromagnetisches Feld 30 in der Umgebung des Begrenzungsleiters 12 erzeugt wird (Schritt 86). In Figur 6 sind exemplarische Magnetfeldlinien 58 dargestellt, die sich zeitlich veränderlich konzentrisch um den Begrenzungsleiter 12 ausbreiten.

Das zeitlich veränderliche elektromagnetische Feld 30, insbesondere eine zeitlich veränderliche Magnetfeldkomponente 32, wird mittels der Detektoreinheit 40, insbesondere einer Spulenvorrichtung, unter Erzeugung eines Empfangssignals in Verfahrensschritt 88 detektiert und an die Auswerteeinheit 44 weitergeleitet (Schritt 90). Nach Empfang des Empfangssignals durch die Auswerteeinheit 44 wird aus dem Empfangssignal in Schritt 92 das der elektromagnetischen Feldänderung zu Grunde liegende Begrenzungssignal 22 als rekonstruiertes Begrenzungssignal 46 rekonstruiert. Gemäß Schritt 94 wird das von dem Referenzsignalgenerator 48 generierte Referenzsignal 50 der Auswerteeinheit 44 zur Verfügung gestellt. Das rekonstruierte Begrenzungssignal 46 wird daraufhin in der Auswerteeinheit 44 in Schritt 96 mit dem Referenzsignal 50 korreliert. In Verfahrensschritt 98 wird abgefragt, ob sich das Referenzsignal 50 und das rekonstruierte Begrenzungssignal 46 zueinander korrelieren lassen, d.h. ob der maximale oder minimale Korrelationswert, der sich als Maximum oder Minimum der für verschiedene Zeitversatze zwischen rekonstruiertem Begrenzungssignal und Referenzsignal berechneten Korrelationswerte ergibt, eine eindeutige Aussage über die Korrelation zulässt, insbesondere also über oder unter einem definierten Grenzwert liegt. Ist dies der Fall ("Ja"), so ist das Roboterfahrzeug 10 auf den Begrenzungssignalgenerator 26 abgestimmt und es wird im nachfolgenden Verfahrensschritt 100 mittels einer Abfrage des Ergebnisses einer Korrelationsberechnung, insbesondere mittels einer Abfrage des berechneten Korrelationswertes, festgestellt, ob sich das Roboterfahrzeug 10 innerhalb (Schritt 102) oder außerhalb (Schritt 104) des durch den Begrenzungsleiter 12 definierten Bereichs 14 befindet. Das Ergebnis der Korrelationsberechnung wird anschließend in Verfahrensschritt 106 oder 106' in geeigneter Weise weiterverarbeitet und bevorzugt zum Durchführen oder Beibehalten bestimmter Funktionen des Roboterfahrzeugs 10, besonders bevorzugt zum Beibehalten oder Ändern der Bewegungsrichtung, verwendet.

Liegt in Verfahrensschritt 98 keine Korrelation vor ("Nein"), d.h. das Referenzsignal 50 und das rekonstruierte Begrenzungssignal 46 lassen sich nicht zueinander korrelieren, so wird eine Notfunktion, beispielsweise ein Stoppen des Roboterfahrzeugs 10, in Schritt 108 ausgelöst.

## Patentansprüche

1. Verfahren zum Erkennen einer Position eines mobilen, insbesondere autonomen, Roboterfahrzeugs (10) relativ zu einem einen definierten Bereich (14) umgebenden Begrenzungsleiter (12), mit den Schritten
- Bereitstellen eines elektrischen Stroms (20) und eines pseudo-zufälligen Begrenzungssignals (22),
- Erzeugen eines Stromsignals (20') unter Verwendung des elektrischen Stroms (20) und des pseudo-zufälligen Begrenzungssignals (22),
- Einspeisen des Stromsignals (20') auf den Begrenzungsleiter (12), sodass ein elektromagnetisches Wechselfeld (30) erzeugt wird,
- Detektieren von Magnetfeldänderungen, die auf das elektromagnetische Wechselfeld (30) zurückgehen, insbesondere mittels einer durch Magnetfeldänderungen induzierten Spannung, und Erzeugen eines Empfangssignals aus den Magnetfeldänderungen,
- Auswerten des Empfangsssignals unter Erzeugung zumindest eines rekonstruierten Begrenzungssignals (46),
- Bereitstellen eines dem pseudo-zufäliigen Begrenzungssignal (22) im Wesentlichen identischen Referenzsignals (50),
- Durchführen eines Mustererkennungsverfahrens, insbesondere eines Korrelationsverfahrens, um einen Korrelationswert zwischen dem Referenzsignal (50) und dem rekonstruierten Begrenzungssignal (46) zu ermitteln,
- Bestimmen der Position innerhalb oder außerhalb des definierten Bereichs (14) abhängig von dem ermittelten Korrelationswert,
**dadurch gekennzeichnet, dass** der elektrische Strom (20) und/oder das pseudo-zufällige Begrenzungssignal (22) mit einem Modulationssignal (28) amplituden-moduliert wird, sodass das Stromsignal (20') amplituden-moduliert ist.

2. Verfahren nach Anspruch 1, **dadurch gekennzeichnet, dass** das Modulationssignal (28) zumindest einen ersten Signalabschnitt mit einer ersten Amplitude und einen zweiten Signalabschnitt mit einer zweiten Amplitude aufweist, wobei sich die erste Amplitude um einen Faktor von der zweiten Amplitude unterscheidet, der insbesondere größer als 10 ist, vorzugsweise größer als 100, besonders bevorzugt größer als 120.

3. Verfahren nach einem der Ansprüche 1-2, **dadurch gekennzeichnet, dass** der erste Signalabschnitt des Modulationssignals (28) zeitlich kürzer ist als der zweite Signalabschnitt des Modulationssignals (28), insbesondere um einen Faktor 5 kürzer ist, bevorzugt um einen Faktor 10 kürzer ist, besonders bevorzugt um einen Faktor 17 kürzer ist.

4. Verfahren nach einem der Ansprüche 1-3, **dadurch gekennzeichnet, dass** der elektrische Strom (20) und/oder das pseudo-zufällige Begrenzungssignal (22) mit einem periodischen Modulationssignal (28) amplituden-moduliert sind/ist.

5. Verfahren nach einem der Ansprüche 1-4, **dadurch gekennzeichnet, dass** das Modulationssignal (28) zumindest teilweise einer Stufenfunktion, einer Rechteckfunktion, einer anderen, insbesondere unstetigen, Funktion oder einer signaltechnischen Annäherung an eine dieser Funktionen entspricht.

6. Verfahren nach einem der Ansprüche 1-5, insbesondere nach Anspruch 5, **dadurch gekennzeichnet, dass** das zeitabhängige Modulationssignal (28) von Null verschieden ist.

7. Verfahren nach einem der Ansprüche 1-6, **dadurch gekennzeichnet, dass** das Modulationssignal (28) derart gewählt ist, dass das in dem Begrenzungsleiter (12) bereitgestellte Stromsignal (20') im Mittel weniger als ein definierter Wert beträgt, insbesondere weniger als 1000 mA, bevorzugt weniger als 800 mA, besonders bevorzugt weniger als 500 mA.

8. Verfahren nach einem der Ansprüche 1-7, wobei das pseudo-zufällige Begrenzungssignal (22) ein binäres Signal mit einer quasi-zufälligen Abfolge von binären Pegeln ist und ein, insbesondere periodisches, Bitmuster (24) aufweist, das so ausgewählt ist, dass eine Länge eines Abschnitts des, insbesondere periodischen, Bitmusters (24), der zu einem gleich langen Abschnitt des invertierten Bitmusters identisch ist, bezüglich der gesamten Länge des Bitmusters (24) einen vorgegebenen Anteil unterschreitet.

9. Verfahren nach einem der Ansprüche 1-8, **dadurch gekennzeichnet, dass** das pseudo-zufällige Begrenzungssignal (22) ein Manchester-kodiertes binäres Signal mit einer quasi-zufälligen Abfolge von binären Pegeln ist und ein, insbesondere periodisches, Bitmuster (24), insbesondere ein periodisches 5-bit Bitmuster (24), aufweist, wobei die Taktfrequenz insbesondere 5 kHz beträgt.

10. Verfahren nach einem der Ansprüche 1-9, **dadurch gekennzeichnet, dass** das pseudo-zufällige Begrenzungssignal (22) nach einer Zeitdauer, die der Phasenlänge des Modulationssignals (28) entspricht, zurückgesetzt wird.

11. Verfahren nach einem der Ansprüche 1-10, wobei ein zeitlicher Korrelationsversatz zwischen dem Referenzsignal (50) und dem rekonstruierten Begrenzungssignal (46) ermittelt wird, indem mehrere Korrelationswerte bei verschiedenen zeitlichen Versatzen bestimmt werden und der zeitliche Korrelationsversatz als der zeitliche Versatz bei dem betragsmäßig größten Korrelationswert bestimmt wird.

12. Verfahren nach einem der Ansprüche 1-11, wobei in Abhängigkeit der Position relativ zum Begrenzungsleiter (12), insbesondere bei Verlassen des durch den Begrenzungsleiter (12) definierten Bereichs (14), mindestens eine Funktion bei dem mobilen Roboterfahrzeug (10) ausgelöst wird.

13. Verfahren nach Anspruch 1-12, wobei eine Bewegung des mobilen Roboterfahrzeugs (10) nur innerhalb des durch den Begrenzungsleiter (12) umgebenen Bereichs (14) zugelassen wird und bei Erreichen des Begrenzungsleiters (12) eine Richtungsänderung des mobilen Roboterfahrzeugs (10) durchgeführt wird.

14. Verfahren nach Anspruch 1-12, wobei das mobile Roboterfahrzeug (10) eine Richtungsänderung in Richtung des Begrenzungsleiters (12) ausführt, wenn die Position des Roboterfahrzeugs (10) relativ zum Begrenzungsleiter (12) als innerhalb oder außerhalb des Bereichs (14) erkannt wird,

15. Mobiles, insbesondere autonomes, Roboterfahrzeug (10), das seine Position relativ zu einem einen definierten Bereich (14) umgebenden Begrenzungsleiter (12), nach einem Verfahren gemäß einem der Ansprüche 1-14, erkennt, aufweisend:
• eine Detektoreinheit (40) zum Detektieren eines sich ändernden magnetischen Felds (32), erzeugt durch ein in einem Begrenzungsleiter (12) unter Verwendung eines bereitgestellten pseudo-zufälligen Begrenzungssignals (22) eingespeistes Stromsignal (20'), sowie Erzeugen eines Empfangssignals aus einer detektierten Magnetfeldänderung,
• einen Referenzsignalgeber (48) zum Bereitstellen eines Referenzsignals (50), das ein im Wesentlichen identisches Bitmuster (24) aufweist wie das bereitgestellte Begrenzungssignal (22),
• eine Auswerteeinheit (44), die ausgebildet ist, unter Verwendung des Empfangssignals
- ein rekonstruiertes Begrenzungssignal (46) zu generieren,
- ein Mustererkennungsverfahren, insbesondere ein Korrelationsverfahren, durchzuführen, um einen Korrelationswert zwischen dem Referenzsignal (50) und dem rekonstruierten Begrenzungssignal (46) zu ermitteln,
- und eine Position relativ zu dem Begrenzungsleiter (12), insbesondere eine Position innerhalb oder außerhalb des durch den Begrenzungsleiter (12) umgebenen Bereichs (14), abhängig von dem ermittelten Korrelationswert zu bestimmen.

16. System (200) zur Durchführung des Verfahrens nach einem der Ansprüche 1-14, insbesondere zum Erkennen einer Position relativ zu einem einen definierten Bereich (14) umgebenden Begrenzungsleiter (12), das zumindest umfasst:
• einen Begrenzungsleiter (12),
• ein mobiles Roboterfahrzeug (10) nach Anspruch 15 und
• einen Signalgenerator zur Erzeugung eines Stromsignals (20') in dem Begrenzungsleiter (12).

17. System (200) nach Anspruch 16, **dadurch gekennzeichnet, dass** der Signalgenerator (26) dazu vorgesehen ist, ein Stromsignal (20') in dem Begrenzungsleiter (12), der den definierten Bereich (14) umgibt, entsprechend einem bereitgestellten pseudo-zufälligen Begrenzungssignal (22) und einem bereitgestellten elektrischen Strom (20) bereitzustellen, wobei das Stromsignal (20') amplituden-moduliert ist.

## Claims

1. Method for identifying a position of a mobile, in particular autonomous, robotic vehicle (10) relative to a boundary conductor (12) surrounding a defined zone (14), having following steps:
- providing an electric current (20) and a pseudo-random boundary signal (22),
- generating a current signal (20') by use of the electric current (20) and the pseudo-random boundary signal (22),
- feeding the current signal (20') to the boundary conductor (12), such that an alternating electromagnetic field (30) is generated,
- detecting magnetic field variations that originate from the alternating electromagnetic field (30), in particular by means of a voltage induced by magnetic field variations, and generating a receive signal from the magnetic field variations,
- evaluating the receive signal, with the generation of at least one reconstructed boundary signal (46),
- providing a reference signal (50) that is substantially identical to the pseudo-random boundary signal (22),
- executing a pattern recognition method, in particular a correlation method, in order to ascertain a correlation value between the reference signal (50) and the reconstructed boundary signal (46),
- determining the position inside or outside the defined zone (14), in dependence on the ascertained correlation value,
**characterized in that** the electric current (20) and/or the pseudo-random boundary signal (22) are/is amplitude-modulated with a modulation signal (28), such that the current signal (20') is amplitude-modulated.

2. Method according to Claim 1, **characterized in that** the modulation signal (28) has at least one first signal portion that has a first amplitude, and a second signal portion that has a second amplitude, wherein the first amplitude differs from the second amplitude by a factor that, in particular, is greater than 10, preferably greater than 100, particularly preferably greater than 120.

3. Method according to either of Claims 1-2, **characterized in that** the first signal portion of the modulation signal (28) is of a shorter duration than the second signal portion of the modulation signal (28), in particular shorter by a factor 5, preferably shorter by a factor 10, particularly preferably shorter by a factor 17.

4. Method according to any one of Claims 1-3, **characterized in that** the electric current (20) and/or the pseudo-random boundary signal (22) are/is amplitude-modulated with a periodic modulation signal (28).

5. Method according to any one of Claims 1-4, **characterized in that** the modulation signal (28) corresponds, at least partly, to a step function, a rectangle function, another, in particular discontinuous, function, or a signal approximation of one of these functions.

6. Method according to any one of Claims 1-5, in particular Claim 5, **characterized in that** the time-dependent modulation signal (28) is other than zero.

7. Method according to any one of Claims 1-6, **characterized in that** the modulation signal (28) is selected in such a manner that the current signal (20') provided in the boundary conductor (12) is on average less than a defined value, in particular less than 1000 mA, preferably less than 800 mA, particularly preferably less than 500 mA.

8. Method according to any one of Claims 1-7, wherein the pseudo-random boundary signal (22) is a binary signal having a quasi-random sequence of binary levels, and has a, in particular periodic, bit pattern (24) that is selected such that a length of a portion of the, in particular periodic, bit pattern (24), that is identical to a portion of the inverted bit pattern of equal length, is less than a predefined proportion with respect to the total length of the bit pattern (24).

9. Method according to any one of Claims 1-8, **characterized in that** the pseudo-random boundary signal (22) is a Manchester-encoded binary signal having a quasi-random sequence of binary levels, and has a, in particular periodic bit pattern (24), in particular a periodic 5-bit bit pattern (24), wherein the timing frequency is, in particular, 5 kHz.

10. Method according to any one of Claims 1-9, **characterized in that** the pseudo-random boundary signal (22) is reset after a time period that corresponds to the phase length of the modulation signal (28).

11. Method according to any one of Claims 1-10, wherein a time correlation offset between the reference signal (50) and the reconstructed boundary signal (46) is ascertained in that a plurality of correlation values are determined, for various time offsets, and the time correlation offset is determined as the time offset for the correlation value that is greatest in amount.

12. Method according to any one of Claims 1-11, wherein at least one function is triggered at the mobile robotic vehicle (10) in dependence on the position relative to the boundary conductor (12), in particular in the case of exit from the zone (14) defined by the boundary conductor (12).

13. Method according to Claim 1-12, wherein movement of the mobile robotic vehicle (10) is only allowed inside the zone (14) surrounded by the boundary conductor (12) and, in the case of the boundary conductor (12) being reached, a change of direction of the mobile robotic vehicle (10) is effected.

14. Method according to Claim 1-12, wherein the mobile robotic vehicle (10) executes a change of direction, in the direction of the boundary conductor (12), if the position of the robotic vehicle (10) relative to the boundary conductor (12) is identified as being inside or outside the zone (14) .

15. Mobile, in particular autonomous, robotic vehicle (10) that identifies its position relative to a boundary conductor (12) surrounding a defined zone (14), according to a method according to any one of Claims 1-14, having:
• a detector unit (40), for detecting a varying magnetic field (32), generated by a fed-in current signal (20') in a boundary conductor (12) by use of a provided pseudo-random boundary signal (22), and for generating a receive signal from a detected magnetic field variation,
• a reference-signal generator (48), for providing a reference signal (50) having a bit pattern (24) that is substantially identical to that of the provided boundary signal (22),
• an evaluation unit (44), which is designed, by use of the receive signal,
- to generate a reconstructed boundary signal (46),
- to execute a pattern recognition method, in particular a correlation method, in order to ascertain a correlation value between the reference signal (50) and the reconstructed boundary signal (46),
- and to determine a position relative to the boundary conductor (12), in particular a position inside or outside the zone (14) surrounded by the boundary conductor (12), in dependence on the ascertained correlation value.

16. System (200) for executing the method according to any one of Claims 1-14, in particular for identifying a position relative to a boundary conductor (12) surrounding a defined zone (14), which comprises, at least:
• a boundary conductor (12),
• a mobile robotic vehicle (10) according to Claim 15, and
• a signal generator for generating a current signal (20') in the boundary conductor (12).

17. System (200) according to Claim 16, **characterized in that** the signal generator (26) is intended to provide a current signal (20') in the boundary conductor (12) that surrounds the defined zone (14), according to a provided pseudo-random boundary signal (22) and a provided electric current (20), wherein the current signal (20') is amplitude-modulated.

## Revendications

1. Procédé pour détecter une position d'un véhicule robot mobile (10), en particulier autonome, par rapport à un conducteur de délimitation (12) entourant une zone définie (14), comprenant les étapes consistant à :
- fournir un courant électrique (20) et un signal de délimitation pseudo-aléatoire (22),
- générer un signal de courant (20') à l'aide du courant électrique (20) et du signal de délimitation pseudo-aléatoire (22),
- appliquer le signal de courant (20') au conducteur de délimitation (12) de manière à générer un champ électromagnétique alternatif (30),
- détecter des variations du champ magnétique attribuées au champ électromagnétique alternatif (30), en particulier au moyen d'une tension induite par des variations de champ magnétique, et générer un signal de réception à partir des variations de champ magnétique,
- évaluer le signal de réception en générant au moins un signal de délimitation reconstruit (46),
- fournir un signal de référence (50) sensiblement identique au signal de délimitation pseudo-aléatoire (22),
- mettre en oeuvre un procédé de reconnaissance de formes, en particulier un procédé de corrélation, afin de déterminer une valeur de corrélation entre le signal de référence (50) et le signal de délimitation reconstruit (46),
- déterminer la position à l'intérieur ou à l'extérieur de la zone définie (14) en fonction de la valeur de corrélation déterminée,
**caractérisé en ce que** le courant électrique (20) et/ou le signal de délimitation pseudo-aléatoire (22) est modulé en amplitude avec un signal de modulation (28) de manière à ce que le signal courant (20') soit modulé en amplitude.

2. Procédé selon la revendication 1, **caractérisé en ce que** le signal de modulation (28) comporte au moins une première section de signal ayant une première amplitude et une seconde section de signal ayant une seconde amplitude, dans lequel la première amplitude diffère de la seconde amplitude d'un facteur qui est en particulier supérieur à 10, de préférence supérieur à 100, et plus préférentiellement supérieur à 120.

3. Procédé selon l'une des revendications 1-2, **caractérisé en ce que** la première section de signal du signal de modulation (28) est temporellement plus courte que la seconde section de signal du signal de modulation (28), en particulier est plus courte d'un facteur 5, de préférence est plus courte d'un facteur 10, et plus préférentiellement est plus courte d'un facteur 17.

4. Procédé selon l'une des revendications 1-3, **caractérisé en ce que** le courant électrique (20) et/ou le signal de délimitation pseudo-aléatoire (22) est/sont modulé(s) en amplitude avec un signal de modulation périodique (28).

5. Procédé selon l'une des revendications 1 à 4, **caractérisé en ce que** le signal de modulation (28) correspond au moins partiellement à une fonction pas à pas, à une fonction rectangulaire, à une autre fonction, en particulier discontinue, ou à une approximation par traitement de signal de l'une de ces fonctions.

6. Procédé selon l'une des revendications 1-5, en particulier selon la revendication 5, **caractérisé en ce que** le signal de modulation dépendant du temps (28) est différent de zéro.

7. Procédé selon l'une des revendications 1-6, **caractérisé en ce que** le signal de modulation (28) est sélectionné de manière à ce que le signal de courant (20') fourni dans le conducteur de délimitation (12) soit en moyenne inférieur à une valeur définie, en particulier inférieur à 1000 mA, de préférence inférieur à 800 mA, et plus préférentiellement inférieur à 500 mA.

8. Procédé selon l'une des revendications 1-7, dans lequel le signal de délimitation pseudo-aléatoire (22) est un signal binaire comportant une séquence quasi-aléatoire de niveaux binaires, et présente une configuration binaire (24), en particulier périodique, qui est sélectionnée de manière à ce qu'une longueur d'une section de la configuration binaire (24), en particulier périodique, qui est identique à une section de même longueur de la configuration binaire inversée, s'abaisse en-dessous d'une fraction prédéterminée par rapport à la longueur totale de la configuration binaire (24).

9. Procédé selon l'une des revendications 1-8, **caractérisé en ce que** le signal de délimitation pseudo-aléatoire (22) est un signal binaire codé par codage Manchester comportant une séquence quasi-aléatoire de niveaux binaires et **en ce qu'**il présente une configuration binaire (24), en particulier périodique, en particulier une configuration binaire périodique à 5 bits (24), dans lequel la fréquence d'horloge est en particulier de 5 kHz.

10. Procédé selon l'une des revendications 1-9, **caractérisé en ce que** le signal de délimitation pseudo-aléatoire (22) est réinitialisé après une période de temps correspondant à la longueur de phase du signal de modulation (28).

11. Procédé selon l'une des revendications 1-10, dans lequel on détermine un décalage temporel de corrélation entre le signal de référence (50) et le signal de délimitation reconstruit (46) en déterminant plusieurs valeurs de corrélation pour différents décalages temporels et en déterminant le décalage temporel de corrélation comme étant le décalage temporel correspondant à la valeur de corrélation la plus élevée.

12. Procédé selon l'une des revendications 1-11, dans lequel au moins une fonction est déclenchée sur le véhicule robot mobile (10) en fonction de la position par rapport au conducteur de délimitation (12), et en particulier lors de la sortie de la zone (14) définie par le conducteur de délimitation (12).

13. Procédé selon l'une des revendications 1-12, dans lequel un mouvement du véhicule robot mobile (10) n'est autorisé qu'à l'intérieur de la zone (14) entourée par le conducteur de délimitation (12) et un changement de direction du véhicule robot mobile (10) est effectué lorsque le conducteur de délimitation (12) est atteint.

14. Procédé selon l'une des revendications 1-12, dans lequel le véhicule robot mobile (10) exécute un changement de direction dans la direction du conducteur de délimitation (12) lorsqu'il est détecté que la position du véhicule robot (10) par rapport au conducteur de délimitation (12) est intérieure ou extérieure à la zone (14).

15. Véhicule robot mobile, en particulier autonome (10), qui détecte sa position par rapport à un conducteur de délimitation (12) entourant une zone définie (14), conformément à un procédé selon l'une des revendications 1-14, comportant :
• une unité de détection (40) destinée à détecter un champ magnétique variable (32) généré par un signal de courant (20') fourni dans un conducteur de délimitation (12) à l'aide d'un signal de délimitation pseudo-aléatoire fourni (22), et générer un signal de réception à partir d'une variation de champ magnétique détectée,
• un générateur de signal de référence (48) destiné à fournir un signal de référence (50) ayant une configuration binaire (24) sensiblement identique à celle du signal de délimitation (22) fourni,
• une unité d'évaluation (44) conçue, à l'aide dudit signal reçu,
- pour générer un signal de délimitation reconstruit (46),
- pour mettre en oeuvre un procédé de reconnaissance de formes, en particulier un procédé de corrélation, afin de déterminer une valeur de corrélation entre le signal de référence (50) et le signal de délimitation reconstruit (46),
- et pour déterminer une position par rapport au conducteur de délimitation (12), en particulier une position à l'intérieur ou à l'extérieur de la zone (14) entourée par le conducteur de délimitation (12), en fonction de la valeur de corrélation déterminée.

16. Système (200) destiné à mettre en oeuvre le procédé selon l'une des revendications 1-14, en particulier pour détecter une position par rapport à un conducteur de délimitation (12) entourant une zone définie (14), qui comprend au moins :
• un conducteur de délimitation (12),
• un véhicule robot mobile (10) selon la revendication 15 et
• un générateur de signal destiné à générer un signal de courant (20') dans le conducteur de délimitation (12).

17. Système (200) selon la revendication 16, **caractérisé en ce que** le générateur de signal (26) est conçu pour fournir un signal de courant (20') dans le conducteur de délimitation (12) entourant la zone définie (14), d'une manière qui correspond à un signal de délimitation pseudo-aléatoire (22) fourni et à un courant électrique (20) fourni, dans lequel le signal de courant (20') est modulé en amplitude.
